# EUROPEAN PATENT APPLICATION

(11) **EP 4 387 126 A1**
(43) Date of publication of application: **19.06.2024**
(21) Application number: 21963620.6
(22) Date of filing: 12.11.2021
(51) Int. Cl.: H04B 17/11, H04B 17/21

(54) **COMMUNICATION APPARATUS, COMMUNICATION METHOD, AND RELATED DEVICE**

(71) Applicant: Huawei Technologies Co., Ltd., Shenzhen, Guangdong 518129 (CN)
(72) Inventor: GUO, Yan, Shenzhen, Guangdong 518129 (CN); GAO, Peng, Shenzhen, Guangdong 518129 (CN); LI, Feng, Shenzhen, Guangdong 518129 (CN)
(74) Representative: Epping - Hermann - Fischer
(86) International application number: PCT/CN2021/130275
(87) International publication number: WO 2023/082171

(57) **Abstract**

This application provides a communication apparatus, a communication method, and a related device, and relates to the field of communication technologies, to implement "one-to-many" digital signal compensation for a communication signal while reducing device costs and space. The apparatus includes a first path, a second path, and a digital circuit. The first path is configured to: receive a first digital signal sent by the digital circuit, and generate a plurality of phase-shifted first radio frequency signals based on the first digital signal. The second path is configured to receive, in a receiving mode, a plurality of third radio frequency signals from an antenna array, where the plurality of third radio frequency signals are from a communication peer end. The second path is further configured to receive, in a feedback mode, a plurality of second radio frequency signals from the antenna array, where the plurality of second radio frequency signals are obtained by coupling the plurality of phase-shifted first radio frequency signals. The digital circuit is configured to perform digital signal compensation on the first digital signal based on a digital feedback signal.

## Description

### TECHNICAL FIELD

This application relates to the field of information technologies, and in particular, to a communication apparatus, a communication method, and a related device.

### BACKGROUND

Currently, with rapid development of a 5G technology, a frequency band of the 5G technology is extended to a millimeter wave. For a millimeter-wave phased array system, to reduce costs of an analog-to-digital converter (ADC) and processing difficulty of digitalized data, beamforming gradually becomes a mainstream technology. In architectures such as analog beamforming (Analog Beam Forming, ABF) and hybrid beamforming (Hybrid Beam Forming, HBF), to reduce costs and space of a device, one digital processing unit usually corresponds to a plurality of millimeter wave transmitting or receiving paths (that is, a "one-to-many" communication architecture). Therefore, a conventional method for performing digital signal compensation on one radio frequency path by one digital processing unit ("one-to-one") is not applicable to the beamforming millimeter-wave phased array system.

The digital signal compensation performed by the digital processing unit on the radio frequency path may include direct current offset compensation, nonlinear compensation, and the like. For example, to improve communication quality, a power amplifier (Power Amplifier, PA) needs to be kept working in a signal saturation area during signal transmission, but this cause nonlinear distortion of an output signal. To resolve a problem of the nonlinear distortion of the output signal, the digital processing unit usually performs digital predistortion processing (Digital Predistortion, DPD) (namely, nonlinear compensation) on the output signal to adjust the problem of nonlinear distortion of the output signal. Because a case in which one digital processing unit corresponding to one power amplifier is usually used in a conventional digital predistortion DPD solution, the conventional digital predistortion DPD solution (a solution for adjusting a nonlinear behavior in a one-to-one manner) is not applicable to the HBF/ABF architecture. However, because the millimeter-wave phased array architecture usually has a large quantity of transmit and receive paths and a large quantity of corresponding power amplifiers, it is difficult to use one signal processing unit for each power amplifier. Therefore, to reduce costs and space of a device, one digital processing unit usually corresponds to a plurality of millimeter wave transmitting or receiving paths (that is, a "one-to-many" processing architecture). However, when one digital predistortion system simultaneously adjusts nonlinear distortion of a plurality of power amplifiers, nonlinear behaviors of the plurality of power amplifiers output by the plurality of power amplifiers to each other are inconsistent due to preparation of the plurality of power amplifiers or different parameters adjusted by a front-end coupled device. As a result, the digital predistortion system cannot simultaneously adjust the nonlinear distortion of the plurality of power amplifiers.

To resolve this problem, in an existing feedback solution, such as an over the air technology (Over The Air, OTA), a target to be calibrated by the digital predistortion system is changed from an output of each power amplifier to a combination of output signals of these power amplifiers over an air interface, namely, a nonlinear signal in a main beam direction. This resolves a problem of "one-to-many" of the digital predistortion system in this scenario. However, in this solution, a set of receiving antennas needs to be independently configured to collect a beam signal from a far field over the air interface, and then transmit the beam signal to a receiver through a radio frequency cable for solving. It is clear that this solution requires an independent receiving antenna, a receiving unit, and a solving unit. This solution exerts tremendous impact on an actual commodity form, and is difficult to implement. Even during production line calibration, this solution is often difficult to use due to the complex procedure of the platform and processing time. Therefore, how to implement "one-to-many" digital signal compensation for a communication signal while reducing device costs and space is an urgent problem to be resolved.

### SUMMARY

This application provides a communication apparatus, a communication method, and a related device, to implement "one-to-many" digital signal compensation for a communication signal while reducing device costs and space.

To achieve the foregoing objective, this application uses the following technical solutions. According to a first aspect, an embodiment of this application provides a communication apparatus. The apparatus includes a first path, a second path, and a digital circuit.

The first path is configured to: receive a first digital signal sent by the digital circuit; generate a plurality of phase-shifted first radio frequency signals based on the first digital signal, where the plurality of phase-shifted first radio frequency signals have different phases; and send the plurality of phase-shifted first radio frequency signals to an antenna array. The second path is configured to: receive, in a receiving mode, a plurality of third radio frequency signals from the antenna array, where the plurality of third radio frequency signals are from a communication peer end; and generate a third digital signal based on the plurality of third radio frequency signals. The second path is further configured to: receive, in a feedback mode, a plurality of second radio frequency signals from the antenna array, where the plurality of second radio frequency signals are obtained by coupling the plurality of phase-shifted first radio frequency signals; generate a digital feedback signal based on the plurality of second radio frequency signals; and feed back the digital feedback signal to the digital circuit. The digital circuit is configured to: generate the first digital signal; process the third digital signal; and perform digital signal compensation on the first digital signal based on the digital feedback signal.

In the feedback solution in the conventional technology, a set of receiving antennas needs to be independently configured to collect a beam signal from a far field over the air interface, and then transmit the beam signal to a receiver through a radio frequency cable for solving. This has a great impact on an actual product form and has high costs. Therefore, in the communication apparatus provided in the first aspect of this application, in the feedback mode, an original idle receive path may be multiplexed to receive a signal sent by a local end, to feed back the signal to the digital circuit to perform digital signal compensation on signals sent by a plurality of local ends. It is noted in advance that the communication apparatus provided in embodiments of the first aspect of this application is a communication apparatus applicable to a time division duplex communication system. Therefore, when the communication apparatus sends a plurality of communication signals (namely, the plurality of phase-shifted first radio frequency signals) to the communication peer end through a sending path (namely, the first path), the communication peer end does not send a communication signal to the communication apparatus. Therefore, an original receive path (for example, the second path) of the communication apparatus is in an idle or a disabled state, that is, the receive path does not need to receive the communication signal from the communication peer end. Therefore, when the plurality of phase-shifted first radio frequency signals are sent to the antenna array through the first path of the communication apparatus, the communication apparatus in this embodiment of this application may enable the idle or disabled second path, so that the second path is in a working state in the feedback mode, to receive the plurality of second radio frequency signals from the antenna array. Then, the second path may generate the digital feedback signal based on the plurality of second radio frequency signals, and feed back the digital feedback signal to the digital circuit, to form a feedback loop. The digital circuit may perform digital signal compensation on the first digital signal based on the digital feedback signal, to improve communication quality of the communication signal. It can be learned from the foregoing description that, the feedback loop is formed based on a local receive path of the communication apparatus, and there is no need to additionally set a separate receive path inside and outside the communication apparatus. This greatly reduces space and costs of the communication apparatus. In addition, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. Therefore, information fed back by the digital feedback signal is a combination signal in the main beam direction, and is not a separate radio frequency signal, in this way, the digital circuit may adjust, based on the digital feedback signal, a signal combined in the main beam direction, to adjust a plurality of radio frequency signals. This further resolves a problem of "one-to-many" in this scenario, namely, a problem that one digital circuit cannot simultaneously perform digital signal compensation on a plurality of radio frequency sending signals. In addition, when the second path is in the receiving mode, that is, when the first path does not send a first beam signal, the second path may be configured to normally receive a communication signal from the communication peer end to perform normal communication. In conclusion, in this embodiment of this application, a receive path in an idle or a disabled state may be multiplexed to receive a communication signal sent by a local transmit path, and feed back the communication signal to the digital circuit, so that the digital circuit implements "one-to-many" digital signal compensation on a transmitting signal. This greatly reduces costs and space of a communication device.

In a possible implementation, the digital signal compensation includes one or more of digital predistortion DPD processing, in-phase-quadrature I-Q mismatch imbalance compensation, direct current offset compensation, intermodulation harmonic compensation, and transmitting signal power control.

In this embodiment of this application, after the second path obtains the digital feedback signal corresponding to the first beam signal, the digital circuit may perform different types of digital signal compensation on the first digital signal in the first path based on the digital feedback signal, to improve quality of the communication signal. For example, the digital circuit may perform digital predistortion DPD processing on the first digital signal, to improve nonlinear distortion of the first radio frequency signal after the first radio frequency signal is amplified by the power amplifier. This greatly improves the quality of the communication signal.

In a possible implementation, the first path includes a first converter and a plurality of first transmitting subpaths. The first converter is configured to: convert the first digital signal into a first radio frequency signal; and send the first radio frequency signal to the plurality of first transmitting subpaths separately. Each of the plurality of first transmitting subpaths is configured to perform phase shifting on the first radio frequency signal to obtain one of the plurality of phase-shifted first radio frequency signals.

In this embodiment of this application, the first path may be configured to convert one digital signal into a plurality of radio frequency signals via the first converter and through the plurality of first transmitting subpaths. The first converter is equivalent to a digital-to-analog converter, and first performs digital-to-analog conversion on the first digital signal to obtain the first radio frequency signal. The plurality of first transmitting subpaths may perform phase shifting at different angles on the received first radio frequency signals, to obtain a plurality of corresponding phase-shifted first radio frequency signals. The plurality of phase-shifted first radio frequency signals have different phases. Therefore, a strong beam signal may be formed at an air interface, to improve quality of communication with the communication peer end.

In a possible implementation, each first transmitting subpath includes a first phase shifter and a first power amplifier. The first phase shifter is configured to perform phase shifting on the first radio frequency signal to obtain the phase-shifted first radio frequency signal. The first power amplifier is configured to amplify the phase-shifted first radio frequency signal.

In this embodiment of this application, a simple and effective first transmitting subpath structure is provided. The structure may be used to control phase shifting and amplification to be performed on a radio frequency signal transmitted in each first transmitting subpath. This can improve the quality of communication with the communication peer end.

In a possible implementation, the first converter includes: a first digital-to-analog converter, configured to convert the first digital signal into a first analog signal; and a first up-converter, configured to convert the first analog signal into the first radio frequency signal.

In this embodiment of this application, a simple and effective first converter structure is provided. The structure may be used to: control digital-to-analog conversion to be performed on a digital signal, to obtain a corresponding analog signal, and perform up-conversion on the analog signal to obtain a corresponding radio frequency signal, so that communication with the communication peer end can be implemented.

In a possible implementation, the second path includes a plurality of first receiving subpaths and a second converter. Each of the plurality of first receiving subpaths is configured to: receive one of the plurality of third radio frequency signals; amplify or attenuate the third radio frequency signal to obtain a processed third radio frequency signal; and perform phase shifting on the processed third radio frequency signal to obtain a phase-shifted third radio frequency signal, where the plurality of first receiving subpaths are configured to obtain a plurality of phase-shifted third radio frequency signals. A part or all of the plurality of first receiving subpaths are configured to: receive the plurality of second radio frequency signals; amplify or attenuate the plurality of second radio frequency signals to obtain a plurality of processed second radio frequency signals; and perform phase shifting on the plurality of processed second radio frequency signals to obtain a plurality of phase-shifted second radio frequency signals. The second converter is configured to convert the plurality of phase-shifted third radio frequency signals into the third digital signal, and convert the plurality of phase-shifted second radio frequency signals into the digital feedback signal.

In this embodiment of this application, the second path may receive a radio frequency signal through the plurality of first receiving subpaths. For example, in the receiving mode, each of the plurality of first receiving subpaths may receive the plurality of third radio frequency signals, that is, when the first path does not send the first beam signal, the communication signal from the communication peer end may be normally received for normal communication interaction. In the feedback mode, a part or all of the plurality in first receiving subpaths may receive a plurality of second radio frequency signals, that is, when the first beam signal is sent in the first path, a communication signal from the first path may be received for feedback, to adjust a communication signal sent by the local end. This can improve the quality of communication with the communication peer end. In addition, the second converter may perform analog-to-digital conversion on the received signal (for example, the plurality of phase-shifted third radio frequency signals or the plurality of phase-shifted second radio frequency signals) to obtain a corresponding digital signal, so that the communication apparatus performs digital processing and analysis.

In a possible implementation, each of the plurality of first receiving subpaths includes a first low noise amplifier and a second phase shifter. The first low noise amplifier is configured to: amplify or attenuate the third radio frequency signal to obtain the processed third radio frequency signal; and amplify or attenuate at least one of the plurality of second radio frequency signals to obtain at least one processed second radio frequency signal. The second phase shifter is configured to: perform phase shifting on the processed third radio frequency signal to obtain a phase-shifted third radio frequency signal; and perform phase shifting on the at least one processed second radio frequency signal to obtain at least one of the plurality of phase-shifted second radio frequency signals.

In this embodiment of this application, a simple and effective first receiving subpath structure is provided. The structure may be used to control amplification or attenuation and phase shifting to be performed on a signal transmitted on each first receiving subpath, so that a complete communication signal with good communication quality can be received.

In a possible implementation, the second converter includes: a first down-converter, configured to: convert the plurality of phase-shifted third radio frequency signals into a third analog signal, and convert the plurality of phase-shifted second radio frequency signals into a second analog signal; and a first analog-to-digital converter, configured to: convert the third analog signal into the third digital signal, and convert the second analog signal into the digital feedback signal.

In this embodiment of this application, a simple and effective second converter structure is provided. The structure may be used to perform down-conversion on a plurality of radio frequency signals to obtain an analog signal, and perform analog-to-digital conversion on the analog signal to obtain a corresponding digital signal, so that the communication apparatus performs digital processing and analysis.

In a possible implementation, the first path further includes a plurality of second receiving subpaths and a third converter. Each second receiving subpath of the plurality of second receiving subpaths is configured to: receive one of a plurality of fourth radio frequency signals from the antenna array; amplify or attenuate the fourth radio frequency signal to obtain a processed fourth radio frequency signal; and perform phase shifting on the processed fourth radio frequency signal to obtain a phase-shifted fourth radio frequency signal; and the plurality of second receiving subpaths are configured to obtain a plurality of phase-shifted fourth radio frequency signals. The third converter is further configured to convert the plurality of phase-shifted fourth radio frequency signals into a fourth digital signal. The digital circuit is further configured to process the fourth digital signal.

In this embodiment of this application, in addition to the first converter and the plurality of corresponding first transmitting subpaths, the first path further includes the third converter and the plurality of corresponding second receiving subpaths. A function of the plurality of second receiving subpaths is consistent with a function of the plurality of first receiving subpaths in the second path in the receiving mode, and the plurality of second receiving subpaths and the plurality of first receiving subpaths can receive a radio frequency signal from the communication peer end and perform corresponding processing.

In a possible implementation, each of the plurality of second receiving subpaths includes a second low noise amplifier and a third phase shifter. The second low noise amplifier is configured to amplify or attenuate the fourth radio frequency signal to obtain the processed fourth radio frequency signal. The third phase shifter is configured to perform phase shifting on the processed fourth radio frequency signal to obtain the phase-shifted fourth radio frequency signal.

In this embodiment of this application, a simple and effective second receiving subpath structure is provided. The structure may be used to control amplification or attenuation and phase shifting to be performed on a signal transmitted on each second receiving subpath, so that a communication signal with good communication quality can be received.

In a possible implementation, the third converter includes: a second down-converter, configured to convert the plurality of phase-shifted fourth radio frequency signals into a fourth analog signal; and a second analog-to-digital converter, configured to convert the fourth analog signal into the fourth digital signal.

In this embodiment of this application, a simple and effective third converter structure is provided. The structure is similar to a second converter structure, and may be used to: perform down-conversion on a plurality of radio frequency signals to obtain an analog signal, and perform analog-to-digital conversion on the analog signal to obtain a corresponding digital signal, so that the communication apparatus performs digital processing and analysis.

In a possible implementation, the first path further includes a first switch module, and the first switch module is configured to control the plurality of first transmitting subpaths or the plurality of second receiving subpaths in the first path to be connected within different time periods.

In this embodiment of this application, the first path further includes the first switch module, configured to control the plurality of first transmitting subpaths and the plurality of second receiving subpaths in the first path to be separately connected in different time periods, to be applicable to a time division duplex communication system.

In a possible implementation, the second path further includes a plurality of second transmitting subpaths and a fourth converter. The digital circuit is further configured to generate a fifth digital signal. The fourth converter is further configured to: convert the fifth digital signal into a fifth radio frequency signal; and send the fifth radio frequency signal to the plurality of second transmitting subpaths separately. Each second transmitting subpath of the plurality of second transmitting subpaths is configured to perform phase shifting on the fifth radio frequency signal to obtain one phase-shifted fifth radio frequency signal, and the plurality of second transmitting subpaths are configured to: obtain a plurality of phase-shifted fifth radio frequency signals, where the plurality of phase-shifted fifth radio frequency signals have different phases; and send the plurality of phase-shifted fifth radio frequency signals to the antenna array.

In this embodiment of this application, in addition to the second converter and the plurality of corresponding first receiving subpaths, the second path further includes the fourth converter and the plurality of corresponding second transmitting subpaths. A function of the plurality of second transmitting subpaths is consistent with a function of the plurality of first transmitting subpaths of the first path, and the plurality of second transmitting subpaths and the plurality of first transmitting subpaths can send signals to the communication peer end. The second path may be configured to convert one digital signal into a plurality of phase-shifted radio frequency signals via the fourth converter and the plurality of second transmitting subpaths, and the plurality of phase-shifted radio frequency signals are simultaneously sent, and a strong beam signal may be formed at an air interface, to improve the quality of communication with the communication peer end.

In a possible implementation, each second transmitting subpath includes a fourth phase shifter and a second power amplifier. The fourth phase shifter is configured to perform phase shifting on the fifth radio frequency signal to obtain the phase-shifted fifth radio frequency signal. The second power amplifier is configured to amplify the phase-shifted fifth radio frequency signal.

In this embodiment of this application, a simple and effective second transmitting subpath structure is provided. The structure may be used to control phase shifting and amplification to be performed on a fifth radio frequency signal transmitted on each second transmitting subpath. This can improve the quality of communication with the communication peer end.

In a possible implementation, the fourth converter includes: a second digital-to-analog converter, configured to convert the fifth digital signal into a fifth analog signal; and a second up-converter, configured to convert the fifth analog signal into the fifth radio frequency signal.

In this embodiment of this application, a simple and effective first converter structure is provided. The structure may be used to: control digital-to-analog conversion to be performed on a digital signal, to obtain a corresponding analog signal, and perform up-conversion on the analog signal to obtain a corresponding radio frequency signal, so that communication with the communication peer end can be implemented.

In a possible implementation, the second path further includes a second switch module, and the second switch module is configured to control the plurality of first receiving subpaths or the plurality of second transmitting subpaths in the second path to be connected within different time periods.

In this embodiment of this application, the second path further includes the second switch module, configured to control the plurality of first receiving subpaths and the plurality of second transmitting subpaths in the second path to be separately connected within different time periods, to be applicable to a time division duplex communication system.

In a possible implementation, the digital circuit includes a baseband processor.

In this embodiment of this application, the digital circuit may generate a digital signal based on a to-be-sent baseband signal processed by the baseband processor, and the baseband processor mainly processes the baseband signal. For example, the baseband processor may extract useful information or data bits from the baseband signal, or convert information or data bits into a to-be-sent baseband signal. The information or data bits may be data that represents user data or control information such as a voice, a text, and a video.

In a possible implementation, the apparatus further includes the antenna array. The antenna array includes a plurality of dual-polarized antenna units, each dual-polarized antenna unit of the plurality of dual-polarized antenna units includes a first polarized antenna array element and a second polarized antenna array element, and the first polarized antenna array element and the second polarized antenna array element are connected and have different polarization directions. The first polarized antenna array element is connected to the first path, and the second polarized antenna array element is connected to the second path.

In this embodiment of this application, an antenna array element for sending a signal and an antenna array element for receiving a signal are separately polarized antenna array elements in different polarization directions of the dual-polarized antenna unit. Because the two polarized antenna array elements are coupled together (that is, connected), in the feedback mode, the second receive path may be configured to receive, at a near field of an air interface through the connected antenna array element, a signal sent by the first path, so that a feedback loop can be formed. According to a second aspect, an embodiment of this application provides a communication method, used in a communication apparatus, where the communication apparatus includes a first path, a second path, and a digital circuit, and the method includes:
receiving, through the first path, a first digital signal sent by the digital circuit; generating a plurality of phase-shifted first radio frequency signals based on the first digital signal, where the plurality of phase-shifted first radio frequency signals have different phases; and sending the plurality of phase-shifted first radio frequency signals to an antenna array;
receiving, in a receiving mode, a plurality of third radio frequency signals from the antenna array through the second path, where the plurality of third radio frequency signals are from a communication peer end; and generating a third digital signal based on the plurality of third radio frequency signals;
receiving, in a feedback mode, a plurality of second radio frequency signals from the antenna array through the second path, where the plurality of second radio frequency signals are obtained by coupling the plurality of phase-shifted first radio frequency signals; generating a digital feedback signal based on the plurality of second radio frequency signals; and feeding back the digital feedback signal to the digital circuit; and
generating the first digital signal by using the digital circuit; processing the third digital signal; and performing digital signal compensation on the first digital signal based on the digital feedback signal.

In a possible implementation, the digital signal compensation includes one or more of digital predistortion DPD processing, in-phase-quadrature I-Q mismatch imbalance compensation, direct current offset compensation, intermodulation harmonic compensation, and transmitting signal power control.

In a possible implementation, the first path includes a first converter and a plurality of first transmitting subpaths; and the generating a plurality of phase-shifted first radio frequency signals based on the first digital signal includes: converting the first digital signal into a first radio frequency signal via the first converter; and sending the first radio frequency signal to the plurality of first transmitting subpaths separately; and performing phase shifting on the first radio frequency signal through each of the plurality of first transmitting subpaths to obtain one of the plurality of phase-shifted first radio frequency signals.

In a possible implementation, each first transmitting subpath includes a first phase shifter and a first power amplifier; and the performing phase shifting on the first radio frequency signal through each of the plurality of first transmitting subpaths to obtain one of the plurality of phase-shifted first radio frequency signals includes: performing phase shifting on the first radio frequency signal via the first phase shifter, to obtain the phase-shifted first radio frequency signal; and amplifying the phase-shifted first radio frequency signal via the first power amplifier.

In a possible implementation, the first converter includes a first digital-to-analog converter and a first up-converter; and the converting the first digital signal into a first radio frequency signal via the first converter includes: converting the first digital signal into a first analog signal via the first digital-to-analog converter; and converting the first analog signal into the first radio frequency signal via the first up-converter.

In a possible implementation, the second path includes a plurality of first receiving subpaths and a second converter; the receiving a plurality of third radio frequency signals from the antenna array through the second path includes: receiving one of the plurality of third radio frequency signals through each of the plurality of first receiving subpaths; amplifying or attenuating the third radio frequency signal to obtain a processed third radio frequency signal; and performing phase shifting on the processed third radio frequency signal to obtain a phase-shifted third radio frequency signal, where the plurality of first receiving subpaths are configured to obtain a plurality of phase-shifted third radio frequency signals; and the generating a third digital signal based on the plurality of third radio frequency signals includes: converting the plurality of phase-shifted third radio frequency signals into the third digital signal via the second converter.

In a possible implementation, the receiving a plurality of second radio frequency signals from the antenna array through the second path includes: receiving the plurality of second radio frequency signals through a part or all of the plurality of first receiving subpaths; amplifying or attenuating the plurality of second radio frequency signals to obtain a plurality of processed second radio frequency signals; and performing phase shifting on the plurality of processed second radio frequency signals to obtain a plurality of phase-shifted second radio frequency signals; and the generating a digital feedback signal based on the plurality of second radio frequency signals includes: converting the plurality of phase-shifted second radio frequency signals into the digital feedback signal via the second converter.

In a possible implementation, each of the plurality of first receiving subpaths includes a first low noise amplifier and a second phase shifter; the amplifying or attenuating the third radio frequency signal to obtain the processed third radio frequency signal includes: amplifying or attenuating the third radio frequency signal via the first low noise amplifier to obtain the processed third radio frequency signal; the amplifying or attenuating the plurality of second radio frequency signals to obtain a plurality of processed second radio frequency signals includes: amplifying or attenuating at least one of the plurality of second radio frequency signals via the first low noise amplifier, to obtain at least one processed second radio frequency signal; the performing phase shifting on the processed third radio frequency signal to obtain a phase-shifted third radio frequency signal includes: performing phase shifting on the processed third radio frequency signal via the second phase shifter to obtain the phase-shifted third radio frequency signal; and the performing phase shifting on the plurality of processed second radio frequency signals to obtain a plurality of phase-shifted second radio frequency signals includes: performing phase shifting on the at least one processed second radio frequency signal via the second phase shifter to obtain at least one of the plurality of phase-shifted second radio frequency signals.

In a possible implementation, the second converter includes a first down-converter and a first analog-to-digital converter; the converting the plurality of phase-shifted third radio frequency signals into the third digital signal via the second converter includes: converting the plurality of phase-shifted third radio frequency signals into a third analog signal via the first down-converter; and converting the third analog signal into the third digital signal via the first analog-to-digital converter; and the converting the plurality of phase-shifted second radio frequency signals into the digital feedback signal via the second converter includes: converting the plurality of phase-shifted second radio frequency signals into a second analog signal via the first down-converter; and converting the second analog signal into the digital feedback signal via the first analog-to-digital converter.

In a possible implementation, the first path further includes a plurality of second receiving subpaths and a third converter; and the method further includes: receiving one fourth radio frequency signal in a plurality of fourth radio frequency signals from the antenna array through each of the plurality of second receiving subpaths; amplifying or attenuating the fourth radio frequency signal to obtain a processed fourth radio frequency signal; performing phase shifting on the processed fourth radio frequency signal to obtain a phase-shifted fourth radio frequency signal, where the plurality of second receiving subpaths are configured to obtain a plurality of phase-shifted fourth radio frequency signals; converting the plurality of phase-shifted fourth radio frequency signals into a fourth digital signal via the third converter; and processing the fourth digital signals by using the digital circuit.

In a possible implementation, each of the plurality of second receiving subpaths includes a second low noise amplifier and a third phase shifter; and the amplifying or attenuating the fourth radio frequency signal to obtain the processed fourth radio frequency signal includes: amplifying or attenuating the fourth radio frequency signal via the second low noise amplifier to obtain the processed fourth radio frequency signal; and performing phase shifting on the processed fourth radio frequency signal via the third phase shifter to obtain a phase-shifted fourth radio frequency signal.

In a possible implementation, the third converter includes a second down-converter and a second analog-to-digital converter; and the converting the plurality of phase-shifted fourth radio frequency signals into a fourth digital signal via the third converter includes: converting the plurality of phase-shifted fourth radio frequency signals into a fourth analog signal via the second down-converter; and converting the fourth analog signal into the fourth digital signal via the second analog-to-digital converter.

In a possible implementation, the first path further includes a first switch module; and the method further includes: controlling, via the first switch module, the plurality of first transmitting subpaths or the plurality of second receiving subpaths in the first path to be connected within different time periods.

In a possible implementation, the second path further includes a plurality of second transmitting subpaths and a fourth converter; and the method further includes: generating a fifth digital signal by using the digital circuit; converting the fifth digital signal into a fifth radio frequency signal via the fourth converter; and sending the fifth radio frequency signal to the plurality of second transmitting subpaths separately; performing phase shifting on the fifth radio frequency signal through each of the plurality of second transmitting subpaths to obtain one phase-shifted fifth radio frequency signal, and obtaining a plurality of phase-shifted fifth radio frequency signals through the plurality of second transmitting subpaths, where the plurality of phase-shifted fifth radio frequency signals have different phases; and sending the plurality of phase-shifted fifth radio frequency signals to the antenna array.

In a possible implementation, each second transmitting subpath includes a fourth phase shifter and a second power amplifier; and the performing phase shifting on the fifth radio frequency signal through each of the plurality of second transmitting subpaths, to obtain one phase-shifted fifth radio frequency signal includes: performing phase shifting on the fifth radio frequency signal via the first phase shifter, to obtain the phase-shifted fifth radio frequency signal; and amplifying the phase-shifted fifth radio frequency signal via the second power amplifier.

In a possible implementation, the fourth converter includes a second digital-to-analog converter and a second up-converter; the converting the fifth digital signal into a fifth radio frequency signal via the fourth converter includes: converting the fifth digital signal into a fifth analog signal via the second digital-to-analog converter; and converting the fifth analog signal into the fifth radio frequency signal via the second up-converter.

In a possible implementation, the second path further includes a second switch module; and the method further includes: controlling, via the second switch module, the plurality of first receiving subpaths or the plurality of second transmitting subpaths in the second path to be connected within different time periods.

In a possible implementation, the digital circuit includes a baseband processor.

In a possible implementation, the apparatus further includes the antenna array. The antenna array includes a plurality of dual-polarized antenna units, each dual-polarized antenna unit of the plurality of dual-polarized antenna units includes a first polarized antenna array element and a second polarized antenna array element, and the first polarized antenna array element and the second polarized antenna array element are connected and have different polarization directions.

The first polarized antenna array element is connected to the first path, and the second polarized antenna array element is connected to the second path.

It may be understood that any possible implementation method provided above includes all content of the communication apparatus provided in the first aspect. Therefore, for beneficial effect that can be achieved by the chip module, refer to the beneficial effect of the communication apparatus provided above. Details are not described herein again.

According to a third aspect, a chip module is provided, including a chip and a package substrate. The chip is fastened to the package substrate, the chip includes any communication apparatus provided in the first aspect or any possible implementation of the first aspect, the package substrate includes an antenna array having a plurality of dual-polarized antenna units, each dual-polarized antenna unit includes a first polarized antenna array element and a second polarized antenna array element, and the first polarized antenna array element and the second polarized antenna array element are coupled and have different polarization directions.

It may be understood that any chip module provided above includes all content of the communication apparatus provided in the first aspect. Therefore, for beneficial effect that can be achieved by the chip module, refer to the beneficial effect of the communication apparatus provided above. Details are not described herein again.

### BRIEF DESCRIPTION OF DRAWINGS

To describe the technical solutions in embodiments of this application or the conventional technology more clearly, the following describes the accompanying drawings for describing embodiments of this application or the conventional technology.
FIG. 1 is a schematic diagram of a beamforming transmission architecture according to an embodiment of this application;
FIG. 2 is a schematic diagram of an antenna array including a backup antenna array element according to an embodiment of this application;
FIG. 3 is a schematic diagram of a structure of a wireless communication system according to an embodiment of this application;
FIG. 4 is a schematic diagram of a structure of a wireless communication device according to an embodiment of this application;
FIG. 5 is a schematic diagram of a structure of a communication apparatus according to an embodiment of this application;
FIG. 6 is a schematic diagram of an antenna array according to an embodiment of this application;
FIG. 7 is a schematic diagram of a circuit structure of a communication apparatus according to an embodiment of this application;
FIG. 8 is a schematic diagram of the communication apparatus, shown in FIG. 7, in a receiving mode according to an embodiment of this application;
FIG. 9 is a schematic diagram of a circuit structure of another communication apparatus according to an embodiment of this application; and
FIG. 10 is a schematic flowchart of a communication method according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are only illustrative of specific ways to implement and use this description and this technology, and do not limit the scope of this application.

Unless otherwise defined, all technical terms used herein have the same meaning as those commonly known to a person of ordinary skill in the art.

The circuits or other assemblies may be described as or referred to as "configured to" perform one or more tasks. In this case, the term "configured to" is used for implying a structure by indicating that a circuit/an assembly includes a structure (for example, a circuit system) that performs one or more tasks during operation. Therefore, even when a specified circuit/assembly is currently not operable (for example, not opened), the circuit/assembly may also be referred to as being configured to perform the task. Circuits/assemblies used in conjunction with the "configured to" phrase include hardware, for example, a circuit for performing an operation.

Technical solution in embodiments of this application is described below with reference to the accompanying drawings in embodiments of this application. In this application, "at least one" means one or more, "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

In embodiments of this application, words such as "first", "second", "third", "fourth", and "fifth" are for distinguishing between objects with similar names, functions, or effects. A person skilled in the art may understand that the words such as "first", "second", "third", "fourth", and "fifth" do not limit a quantity and an execution sequence.

In embodiments of this application, the term "coupling" or "connection" is for indicating an electrical connection, including a direct connection through a wire or a connection end, or an indirect connection via another device. Therefore, "coupling" or "connection" should be considered as an electronic communication connection in a broad sense.

"An embodiment" mentioned in the specification indicates that a particular characteristic, structure or feature described with reference to this embodiment may be included in at least one embodiment of this application. The phrase shown in various locations in the specification may neither necessarily mean a same embodiment, nor mean an independent or optional embodiment exclusive from another embodiment. It is explicitly and implicitly understood by a person skilled in the art that embodiments described in this specification may be combined with another embodiment.

It should be noted that, in this application, terms such as "an example" or "for example" are used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

First, to facilitate understanding of embodiments of this application, the following specifically analyzes a technical problem that needs to be resolved and an application scenario in embodiments of this application.

A power amplifier (Power Amplifier, PA) is the most important device in a first path for a modem communication system. A main function of the power amplifier is to amplify, through a direct current function, a low-power signal processed by a circuit to a rated power level specified in a communication system standard, and then feed an amplified low-power signal to a back-end device, such as a duplexer and an antenna, for wireless transmission. To obtain optimal efficiency, a system designer usually requires the power amplifier to work in a high efficiency interval, that is, a signal saturation interval. Due to some non-ideal characteristics of triodes and front-and-back-matched networks or devices in power amplifiers, the power amplifier usually presents a very strong nonlinear gain characteristic in a saturation interval, and for most commercial power amplifiers, gain characteristics of the power amplifiers even present very obvious and complex nonlinear characteristics in an entire signal power interval. Such nonlinearity undoubtedly deteriorates transmission quality of the communication system and affects a communication system of an adjacent frequency band. To resist the nonlinearity of the power amplifier, a digital predistortion (Digital Predistortion, DPD) technology is widely used in a plurality of wireless communication systems, including an access network base station and a user terminal. A principle of an existing digital predistortion system is to perform fitting on a distortion characteristic of a power amplifier based on a nonlinear behavior model, then obtain an inverse function of the distortion characteristic of the power amplifier, and implement the inverse function by using a digital circuit. In this way, a sent signal passes through two nonlinear modules with opposite characteristics: a digital predistortion DPD module (included in the foregoing digital circuit) and a power amplifier PA, and distortion characteristics of the two nonlinear modules cancel each other, to obtain a final linear transmission characteristic.

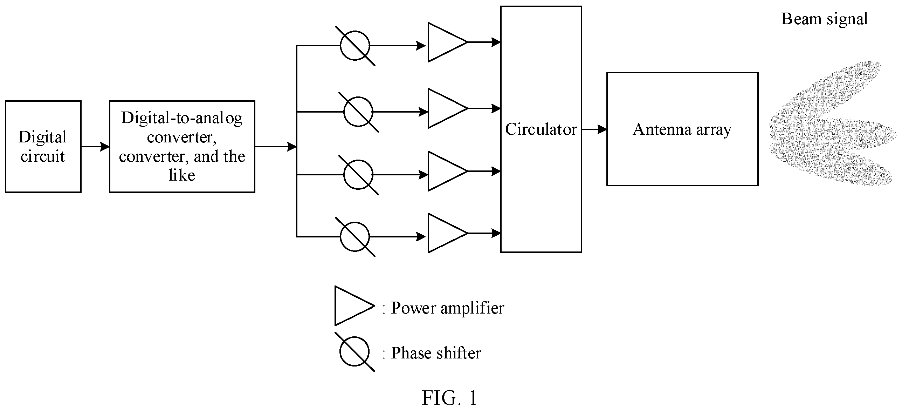

In addition, for a millimeter-wave phased array system, analog beamforming (Analog Beamforming, ABF) and hybrid beamforming (Hybrid Beamforming, HBF) are common signal transmission and receiving architectures in a modern broadband wireless system. FIG. 1 is a schematic diagram of a beamforming transmission architecture according to an embodiment of this application. A feature of the architecture is that after a series of operations such as digital-to-analog conversion of a digital-to-analog converter and up-conversion of a converter are performed on a digital signal output by a digital circuit, an obtained digital signal is input to a plurality of power amplifiers separately, and phase rotation is performed on a received signal via an analog phase shifter or another device with a phase shifting function before the plurality of power amplifiers, so that energy of signals that are amplified by the plurality of power amplifiers and that are finally output by an air interface is aggregated in a specific direction. This achieves beamforming effect, and forms a beam signal. Usually, this architecture is commonly used in a wireless communication system in a millimeter-wave frequency band. Recent research shows that this architecture may also be used in a conventional mobile communication frequency band. Therefore, to reduce costs and space of a device, one digital predistortion DPD module usually needs to simultaneously correct nonlinear outputs of a plurality of power amplifiers. However, nonlinear behaviors of outputs of the plurality of power amplifiers are inconsistent due to preparation of these power amplifiers or different parameters adjusted by a front-end coupled device. A conventional digital predistortion DPD solution (a solution for adjusting nonlinear behavior in a one-to-one manner) is not applicable to the HBF/ABF architecture. The conventional digital predistortion DPD solution has two disadvantages. One is that, in the conventional digital predistortion DPD solution, coupled signals are close to an output port of a power amplifier on a circuit board. When there are a large quantity of paths, an output coupling network of the power amplifier is complex, and is difficult to implement in a compact phased array antenna space. The other is that, in the conventional digital predistortion DPD solution, one signal processing unit usually corresponds to one transmit power amplifier. However, because a millimeter-wave active phased array usually has a large quantity of paths and a large quantity of transmit power amplifiers, it is difficult to use one signal processing unit for each power amplifier.

Therefore, to resolve this problem, in the conventional technology, a target to be calibrated by the digital predistortion DPD module is changed from an output of each power amplifier to a combined output of output signals of these power amplifiers over an air interface, that is, a nonlinear signal in a main beam direction. This resolves a problem of "one-to-many" for DPD in this scenario. Similarly, in addition to nonlinear compensation, I-Q mismatch and imbalance compensation, direct current offset compensation, intermodulation harmonic compensation, transmitting signal power control detection, and the like may alternatively be performed through feedback of a signal in a main beam direction, to resolve a problem of "one-to-many" of a digital circuit in the HBF/ABF architecture, and improve quality of a communication signal.

In a feedback solution in the conventional technology, a receiving antenna (for example, a horn antenna) needs to be independently configured to collect a beam signal from a far field over the air interface, and then transmit the beam signal to a receiver (for example, a broadband spectrum analyzer or another radio receiver) through a radio frequency cable for sampling, and then is sent to a processing unit having a computing capability for solving, for example, a computer (Personal Computer, PC) or an application-specific integrated circuit ASIC (Application-Specific Integrated Circuit, ASIC). It is clear that this solution requires an independent receiving antenna, a receiving unit, and a solving unit. This solution exerts tremendous impact on an actual commodity form, is difficult to implement, and has high costs during online calibration. Even in production line (or offline) calibration, this solution is often difficult to use due to the complex procedure of the platform and processing time.

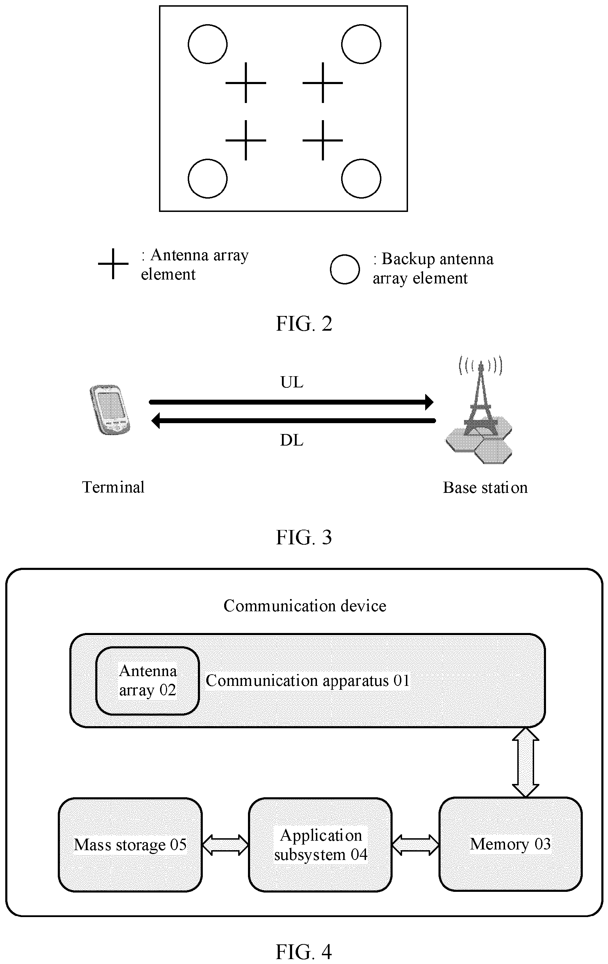

Another feedback solution in the conventional technology is to configure additional backup antenna array elements on a panel of a transmit antenna array. FIG. 2 is a schematic diagram of an antenna array including backup antenna array elements according to an embodiment of this application. As shown in FIG. 2, there are a plurality of additional backup antenna array elements (for example, four backup antenna array elements in FIG. 2) around normal antenna array elements, and the four backup antenna array elements may be configured to collect and obtain a beam signal at a near field of an air interface. However, in the feedback solution, a set of radio frequency receiving processing paths needs to be independently configured in a transmitter or a transmit architecture to connect to the four backup antenna array elements. It is also difficult to apply the feedback solution in a scenario in which a terminal device, a customer premises equipment, or the like has strict requirements on a product volume and costs.

Therefore, this application provides a communication apparatus. An original receive path of the communication apparatus is multiplexed, so that a nonlinear distortion problem of a signal can be resolved in the "one-to-many" scenario, and a space volume and costs of a device can be reduced. For example, the apparatus includes a first path, a second path, and a digital circuit. The first path is configured to: receive a first digital signal sent by the digital circuit, and generate a plurality of phase-shifted first radio frequency signals based on the first digital signal. The second path is configured to receive, in a receiving mode, a plurality of third radio frequency signals from an antenna array, where the plurality of third radio frequency signals are from a communication peer end. The second path is further configured to receive, in a feedback mode, a plurality of second radio frequency signals from the antenna array, where the plurality of second radio frequency signals are obtained by coupling the plurality of phase-shifted first radio frequency signals. The digital circuit is configured to perform digital signal compensation on the first digital signal based on a digital feedback signal. For specific descriptions of the communication apparatus, refer to the following embodiments. Details are not described in this embodiment of this application.

For an application scenario of embodiments of this application, the technical solutions of this application are mainly applicable to a wireless communication system. The wireless communication system may comply with wireless communication standards of the 3rd generation partnership project (3rd generation partnership project, 3GPP), or may comply with other wireless communication standards, for example, wireless communication standards of the 802 series (for example, 802.11, 802.15, or 802.20) of the institute of electrical and electronics engineers (Institute of Electrical and Electronics Engineers, IEEE).

It should be understood that, in the wireless communication system, devices may be classified into devices that provide a wireless network service and devices that use a wireless network service. The device that provides the wireless network service is a device that is a part of a wireless communication network, and may be referred to as network equipment (network equipment) or a network element (network element) for short. The network equipment usually belongs to carriers or infrastructure providers. The network equipment may be further classified into a radio access network (radio access network, RAN) device and a core network (core network, CN) device. A typical RAN device includes a base station (base station, BS).

It should be understood that the base station sometimes may be alternatively referred to as a wireless access point (access point, AP) or a transmission reception point (transmission reception point, TRP). Specifically, the base station may be a generation NodeB (generation NodeB, gNB) in a 5G new radio (new radio, NR) system, or an evolved NodeB (evolved NodeB, eNB) in a 4G long term evolution (long term evolution, LTE) system. The base station may be classified into a macro base station (macro base station) and a micro base station (micro base station) based on different physical forms or transmit powers of the base stations. A micro base station is also sometimes referred to as a small base station or a small cell.

The device that uses the wireless network service is usually located on an edge of a network, and may be briefly referred to as a terminal (terminal). The terminal can establish a connection to the network equipment, and provides a wireless communication service for a user based on a service of the network equipment. It should be understood that, because the terminal has a closer relationship with the user, the terminal sometimes is also referred to as user equipment (user equipment, UE) or a subscriber unit (subscriber unit, SU). In addition, compared with a base station that is usually placed at a fixed location, the terminal usually moves along with the user, and sometimes is also referred to as a mobile station (mobile station, MS). In addition, some network equipment such as a relay node (relay node, RN) or a wireless router sometimes may also be considered as terminals because the network equipment has a UE identity or belongs to the user. Specifically, the terminal includes but is not limited to: a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a terminal in industrial control (industrial control), a smart home device (for example, a refrigerator, a television, an air conditioner, or an electric meter), a smart robot, a workshop device, a terminal in self-driving (self-driving), a terminal in remote surgery (remote medical surgery), a terminal in a smart grid (smart grid), a terminal in transportation safety (transportation safety), a terminal in a smart city (smart city), a terminal in a smart home (smart home), or a flight device (for example, a smart robot, a hot air balloon, an unmanned aerial vehicle, or an airplane).

For ease of description, technical solutions in embodiments of this application are described in detail through the base station and the terminal as examples in this application.

FIG. 3 is a schematic diagram of a structure of a wireless communication system according to an embodiment of this application. As shown in FIG. 3, the wireless communication system includes a terminal and a base station. Based on different transmission directions, a transmission link from the terminal to the base station is denoted as an uplink (uplink, UL), and a transmission link from the base station to the terminal is denoted as a downlink (downlink, DL). Similarly, data transmission on an uplink may be denoted as uplink data transmission or uplink transmission for short, and data transmission on a downlink may be denoted as downlink data transmission or downlink transmission for short.

In the wireless communication system, the base station can provide a specific geographic area with communication coverage via an integrated or external antenna device. One or more terminals located within communication coverage of the base station can all access the base station. One base station can manage one or more cells (cells). Each cell has a piece of identification (identification). The identification is also referred to as a cell identity (cell identity, cell ID). From a perspective of a radio resource, a cell is a combination of a downlink radio resources, and an uplink radio resource (optional) that is paired with the downlink radio resource.

The terminal and the base station need to learn of configurations predefined by the wireless communication system, including a radio access technology (radio access technology, RAT) supported by the system and a radio resource configuration specified by the system, for example, a basic configuration of a frequency band and carrier. A carrier is a frequency range that complies with a specification of the system. The frequency range may be determined jointly based on a center frequency of the carrier (defined as a carrier frequency) and a bandwidth of the carrier. The configurations predefined by the system may be used as a part of a standard protocol for the wireless communication system, or may be determined through interaction between the terminal and the base station. Content of a related standard protocol may be prestored in storage devices of the terminal and the base station, or embodied as hardware circuits or software code of the terminal and the base station.

In the wireless communication system, the terminal and the base station support one or more same RATs, for example, 5G NR, 4G LTE, or an RAT of a future evolved system. Specifically, the terminal and the base station use the same air interface parameter, coding scheme, modulation scheme, and the like, and communicate with each other based on a radio resource specified by the system.

First, it should be noted that the communication apparatus, the foregoing communication device, and the like in this application and the following embodiments are all used in a time division duplex (Time Division Duplex, TDD) wireless communication system. The time division duplex means that one RF frequency is shared for receiving and sending, and different slots are used for communication on an uplink and a downlink. That is, on the uplink and downlink shown in FIG. 3, only one transmit end sends a signal at a same moment. In the TDD system, time of signal transmission on the uplink and time of signal transmission on the downlink are arranged in sequence on a time axis, that is, the uplink is sent in a "t1" slot, and the downlink is sent in a "t2" slot. There is a guard time interval "t3" between the two sending slots. In addition, both uplink and downlink transmissions are performed on a same RF carrier frequency (Fc). Certainly, the TDD is not used to limit another implementation form of the embodiment, and a related architecture may be adapted to another system, such as a frequency division duplex (FDD) system or a full-duplex system.

FIG. 4 is a schematic diagram of a structure of a wireless communication device according to an embodiment of this application.

The wireless communication device may be the terminal or the base station in embodiments of this application. As shown in FIG. 4, the wireless communication device may include a plurality of assemblies, for example, a communication apparatus 01, an antenna array 02, a memory (memory) 03, an application subsystem 04, and a mass storage 05 (mass storage). The assemblies may be coupled through various interconnection buses or in other electrical connection manners. In addition, the wireless communication device further includes storage devices, for example, the memory 03 and the mass storage 05 in FIG. 3. In addition, the application subsystem and the communication apparatus 01 may further separately include one or more caches. In a specific implementation, the storage device may be classified into a volatile memory (volatile memory) and a nonvolatile memory (nonvolatile memory, NVM). The volatile memory is a storage device in which data stored in the storage device is lost when a power supply is interrupted. At present, the volatile memory is mainly a random access memory (random access memory, RAM), including a static random access memory (static RAM, SRAM) and a dynamic random access memory (dynamic RAM, DRAM). The nonvolatile memory is a storage device in which data stored in the memory is not lost even if a power supply is interrupted. Common nonvolatile memories include a read-only memory (read-only memory, ROM), an optical disc, a magnetic disk, various storage devices based on a flash memory (flash memory) technology, and the like. Usually, a volatile memory may be used as the memory and the cache, and a nonvolatile memory, for example, a flash memory, may be used as the mass storage.

The application subsystem 04 may be used as a main control system or a main computing system of the wireless communication device, and is configured to: run a main operating system and an application, manage software and hardware resources of the entire wireless communication device, and provide a user operation interface for a user. In addition, the application subsystem 04 may further include driver software related to another subsystem (for example, a baseband subsystem). The application subsystem 04 may include one or more processors. A plurality of processors may be a plurality of processors of a same type, or may include a combination of a plurality of types of processors. In this application, the processor may be a processor for a general purpose, or may be a processor designed for a specific field. For example, the processor may be a central processing unit (central processing unit, CPU), a digital signal processor (digital signal processor, DSP), or a microcontroller (micro control unit, MCU). Alternatively, the processor may be a graphics processing unit (graphics processing unit, GPU), an image signal processor (image signal processor, ISP), an audio signal processor (audio signal processor, ASP), or an AI processor specially designed for an artificial intelligence (artificial intelligence, AI) application. The AI processor includes but is not limited to a neural network processing unit (neural network processing unit, NPU), a tensor processing unit (tensor processing unit, TPU), and a processor referred to as an AI engine.

In addition, for structures and functions of the communication apparatus 01 and the antenna array 02, refer to related descriptions in the following embodiments. Details are not described herein in this embodiment of this application.

Based on the communication device provided above, the following describes several communication apparatuses on which embodiments of this application are based.

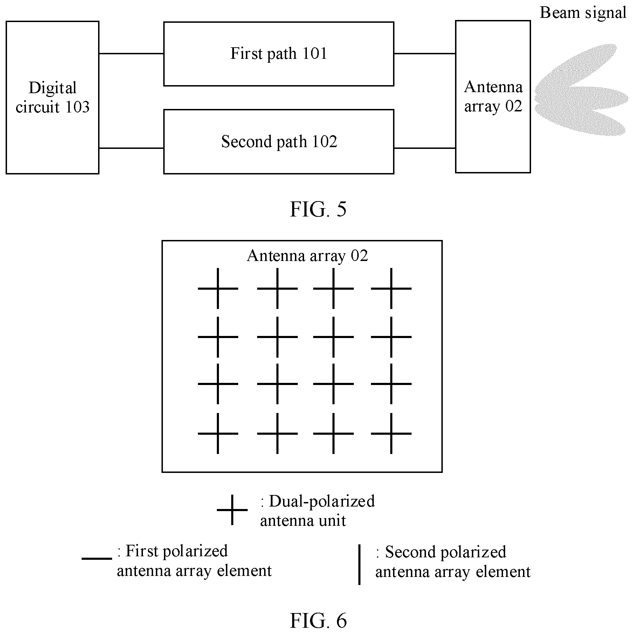

FIG. 5 is a schematic diagram of a structure of a communication apparatus according to an embodiment of this application. As shown in FIG. 5, the communication apparatus (which is equivalent to the communication apparatus 01 in the communication device shown in FIG. 4) includes: a first path 101, a second path 102, and a digital circuit 103.

The first path 101 is configured to: receive a first digital signal sent by the digital circuit; generate a plurality of phase-shifted first radio frequency signals based on the first digital signal, where the plurality of phase-shifted first radio frequency signals have different phases; and send the plurality of phase-shifted first radio frequency signals to an antenna array. The first path may send the plurality of phase-shifted first radio frequency signals through the antenna array, to form a beam signal at an air interface, and communicate with a communication peer end.

The second path 102 is configured to: receive, in a receiving mode, a plurality of third radio frequency signals from the antenna array, where the plurality of third radio frequency signals are from the communication peer end; and generate a third digital signal based on the plurality of third radio frequency signals. When the second path is in the receiving mode, that is, when the first path does not send a first beam signal, the second path may be configured to normally receive a communication signal from the communication peer end to perform normal communication interaction.

The second path 102 is further configured to: receive, in a feedback mode, a plurality of second radio frequency signals from the antenna array, where the plurality of second radio frequency signals are obtained by coupling the plurality of phase-shifted first radio frequency signals; generate a digital feedback signal based on the plurality of second radio frequency signals; and feed back the digital feedback signal to the digital circuit. In the feedback mode, the second path may multiplex an original idle receive path to receive a signal sent by a local end, to feed back the signal to the digital circuit to perform digital signal compensation on signals sent by a plurality of local ends. Further, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. This resolves a problem of "one-to-many" in this scenario.

The digital circuit 103 is configured to: generate the first digital signal; process the third digital signal; and perform digital signal compensation on the first digital signal based on the digital feedback signal. The digital circuit may be configured to: support a case in which the plurality of phase-shifted first radio frequency signals are sent through the first path; and receive and process the third radio frequency signal sent by the communication peer end. The digital circuit may be configured to perform digital signal compensation on the first digital signal based on the digital feedback signal, to adjust the plurality of phase-shifted first radio frequency signals sent through the first path. This can improve communication quality.

As shown in FIG. 5, an input end of the first path 101 is coupled to an output end of the digital circuit 103, an output end of the first path 101 is coupled to the antenna array, an input end of the second path 102 is coupled to the antenna array, and an output end of the second path 102 is coupled to an input end of the digital circuit 103.

The digital circuit 103 may obtain a plurality of different compensation model coefficients based on the digital feedback signal, and perform digital signal compensation corresponding to the coefficient on the first digital signal based on the obtained compensation model coefficients, to implement online feedback of a sending signal.

Optionally, the digital signal compensation includes one or more of digital predistortion DPD processing, in-phase-quadrature I-Q mismatch imbalance compensation, direct current offset compensation, intermodulation harmonic compensation, and transmitting signal power control. The digital signal compensation means that the digital circuit performs fitting, based on a corresponding compensation model (for example, a digital predistortion DPD processing model, a direct current offset compensation model, or an in-phase-quadrature I-Q mismatch compensation model), on a characteristic of the phase-shifted first radio frequency signal sent through the first path. Then, a corresponding inverse function (which is equivalent to a compensation model coefficient corresponding to a compensation model) is obtained and implemented in a digital baseband/intermediate frequency by using the digital circuit. For example, for digital predistortion DPD processing, the sending signal passes through two nonlinear modules with opposite characteristics: a corresponding compensation model (the digital predistortion DPD processing model) and a radio frequency device (a power amplifier), and distortion features of the two nonlinear modules cancel each other, to obtain the sending signal with good quality. In addition, the compensation model coefficient corresponding to the compensation model may include, for example, a nonlinear distortion compensation coefficient, an I-Q mismatch imbalance compensation coefficient, a direct current offset compensation coefficient, and other coefficients for non-ideal radio frequency impact. For example, the nonlinear distortion compensation coefficient corresponds to digital predistortion DPD processing, the I-Q mismatch imbalance compensation coefficient corresponds to I-Q mismatch imbalance compensation, the direct current offset compensation coefficient corresponds to direct current offset compensation, an intermodulation harmonic compensation coefficient corresponds to intermodulation harmonic compensation, and the power control of the transmitting signal corresponds to a power control codeword. In this embodiment of this application, after the second path obtains the digital feedback signal corresponding to the first beam signal, the digital circuit may perform different types of digital signal compensation on the first digital signal sent through the first path based on the digital feedback signal, to improve quality of the signal.

Optionally, the digital signal compensation includes digital predistortion DPD processing; and the digital circuit includes a digital processing module and a digital predistortion DPD module. The digital processing module is configured to: obtain a DPD coefficient based on the digital feedback signal; and send the DPD coefficient to the digital predistortion DPD module. The digital predistortion DPD module is configured to: perform nonlinear correction on an input baseband signal based on the DPD coefficient, to obtain the first digital signal; and send the first digital signal to the first path.

Optionally, the digital circuit includes a baseband processor. The baseband processor mainly completes processing on the baseband signal. The baseband processor may extract useful information or data bits from the baseband signal, or convert information or data bits into a to-be-sent baseband signal. The information or data bits may be data that represents user data or control information such as a voice, a text, and a video. For example, the baseband processor may implement modulation and demodulation, encoding and decoding, and other signal processing operations. For different radio access technologies, for example, 5G NR and 4G LTE, baseband signal processing operations are not completely the same.

In addition, because the radio frequency signal is usually an analog signal, and the baseband processor mainly processes a digital signal, an analog-to-digital conversion device is further required in a wireless communication device. In this embodiment of this application, the conversion device is disposed in the first path and the second path. However, this is not specifically limited in embodiments of this application. For example, in some embodiments, the converter may be disposed in the digital circuit. The conversion device includes an analog-to-digital converter (analog-to-digital converter, ADC) that converts an analog signal into a digital signal, and a digital-to-analog converter (digital-to-analog converter, DAC) that converts a digital signal into an analog signal.

Similar to the application subsystem shown in FIG. 3, the baseband processor may also include one or more processors. In addition, the baseband processor may further include one or more hardware accelerators (hardware accelerators, HACs). The hardware accelerator may be configured to specially complete some sub-functions with high processing overheads, for example, assembling and parsing a data packet (data packet), and encrypting and decrypting a data packet. The sub-functions may also be implemented via a processor with a general function. However, due to performance or costs, it may be more proper to use the hardware accelerator to implement the sub-functions. In a specific implementation, the hardware accelerator is mainly implemented by using an application-specific integrated circuit (application-specific integrated circuit, ASIC). Certainly, the hardware accelerator may alternatively include one or more simple processors, for example, an MCU.

The baseband processor may be integrated into one or more chips, and the chip may also be referred to as a baseband processing chip or a baseband chip. The baseband processor may be used as an independent chip, and the chip may be referred to as a modem (modem) or a modem chip. The baseband processor can be manufactured and sold in a unit of the modem chip. The modem chip is sometimes referred to as a baseband processor or a mobile processor. In addition, the baseband processor may be further integrated into a larger chip, and is manufactured and sold in a unit of a larger chip. The larger chip may be referred to as a system chip, a chip system, a system on a chip (system on a chip, SoC), or a SoC chip for short. Software assemblies of the baseband processor may be built in hardware assemblies of the chip before the chip is delivered, or may be imported from another nonvolatile memory into the hardware assemblies of the chip after the chip is delivered, or the software assemblies may be downloaded and updated online through a network. In embodiments of this application, the digital circuit, the first path, and the second path (which is equivalent to a radio frequency subsystem) jointly form the communication apparatus, to provide a wireless communication function for the wireless communication device. Usually, the digital circuit is responsible for managing software and hardware resources of the communication apparatus, and may configure a working parameter of the radio frequency subsystem. In addition, the baseband processor in the digital circuit may run an operating system of the communication apparatus. The operating system is usually an embedded operating system or a real-time operating system (real-time operating system), for example, a VxWorks operating system or a QuRT system. In addition, optionally, the communication apparatus further includes the antenna array. The antenna array includes a plurality of dual-polarized antenna units, each dual-polarized antenna unit of the plurality of dual-polarized antenna units includes a first polarized antenna array element and a second polarized antenna array element, and the first polarized antenna array element and the second polarized antenna array element are connected and have different polarization directions. The first polarized antenna array element is connected to the first path, and the second polarized antenna array element is connected to the second path.

FIG. 6 is a schematic diagram of an antenna array according to an embodiment of this application. As shown in FIG. 6, the antenna array includes a plurality of dual-polarized antenna units, each antenna unit is a dual-polarized antenna unit, each dual-polarized antenna unit includes a first polarized antenna array element and a second polarized antenna array element, and each dual-polarized antenna unit separately receives or sends a signal. The first polarized antenna array element and the second polarized antenna array element are coupled together, but polarization directions are different. It may be understood that the first polarized antenna array element is connected to the first path, that is, the first polarized antenna array element in the plurality of dual-polarized antenna units sends a signal through the first path; and the second polarized antenna array element is connected to the second path, that is, the second polarized antenna array element in the plurality of dual-polarized antenna units receives a signal through the second path. The antenna array element for sending the signal and the antenna array element for receiving the signal are respectively polarized antenna array elements that are in different polarization directions and that are of the dual-polarized antenna unit. Because the two polarized antenna array elements are coupled together, the second polarized antenna array element for receiving the signal may receive, at a near field of an air interface, the signal sent by the first polarized antenna array element. It should be noted that, because the first polarized antenna array element and the second polarized antenna array element are coupled together (a physical distance is the shortest), that the second polarized antenna array element receives the signal sent by the first polarized antenna array element can ensure quality of the received signal and reduce interference. The antenna array is also equivalent to the antenna array 02 in the communication apparatus 01 shown in FIG. 4.

It should be noted that polarization directions of the dual-polarized antenna unit may be horizontal polarization, vertical polarization, +45° polarization, -45° polarization, and the like. This is not specifically limited in embodiments of this application.

In addition, it should be further noted that the antenna array 02 is built in the communication device shown in FIG. 4 and the communication apparatus shown in FIG. 5 in embodiments of this application. However, the antenna array 02 may be alternatively independent of the communication device or the communication apparatus. This is not specifically limited in embodiments of this application.

In the feedback solution in the conventional technology, a set of receiving antennas needs to be independently configured to collect a beam signal from a far field over the air interface, and then transmit the beam signal to a receiver through a radio frequency cable for solving. This has a great impact on an actual product form and has high costs. Therefore, in the communication apparatus provided in the first aspect of this application, in the feedback mode, an original idle receive path may be multiplexed to receive a signal sent by a local end, to feed back the signal to the digital circuit to perform digital signal compensation on signals sent by a plurality of local ends. It is noted in advance that the communication apparatus provided in embodiments of the first aspect of this application is a communication apparatus applicable to a time division duplex communication system. Therefore, when the communication apparatus sends a plurality of communication signals (namely, the plurality of phase-shifted first radio frequency signals) to the communication peer end through a sending path (namely, the first path), the communication peer end does not send a communication signal to the communication apparatus. Therefore, an original receive path (for example, the second path) of the communication apparatus is in an idle or a disabled state, that is, the receive path does not need to receive the communication signal from the communication peer end. Therefore, when the plurality of phase-shifted first radio frequency signals are sent to the antenna array through the first path of the communication apparatus, the communication apparatus in this embodiment of this application may enable the idle or disabled second path, so that the second path is in a working state in the feedback mode, to receive the plurality of second radio frequency signals from the antenna array. Then, the second path may generate the digital feedback signal based on the plurality of second radio frequency signals, and feed back the digital feedback signal to the digital circuit, to form a feedback loop. The digital circuit may perform digital signal compensation on the first digital signal based on the digital feedback signal, to improve communication quality of the communication signal. It can be learned from the foregoing description that, the feedback loop is formed based on a local receive path of the communication apparatus, and there is no need to additionally set a separate receive path inside and outside the communication apparatus. This greatly reduces space and costs of the communication apparatus. In addition, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. Therefore, information fed back by the digital feedback signal is a combination signal in the main beam direction, and is not a separate radio frequency signal, in this way, the digital circuit may adjust, based on the digital feedback signal, a signal combined in the main beam direction, to adjust a plurality of radio frequency signals. This further resolves a problem of "one-to-many" in this scenario, namely, a problem that one digital circuit cannot simultaneously perform digital signal compensation on a plurality of radio frequency sending signals. In addition, when the second path is in the receiving mode, that is, when the first path does not send a first beam signal, the second path may be configured to normally receive a communication signal from the communication peer end to perform normal communication. In conclusion, in this embodiment of this application, a receive path in an idle or a disabled state may be multiplexed to receive a communication signal sent by a local transmit path, and feed back the communication signal to the digital circuit, so that the digital circuit implements "one-to-many" digital signal compensation on a transmitting signal. This greatly reduces costs and space of a communication device.

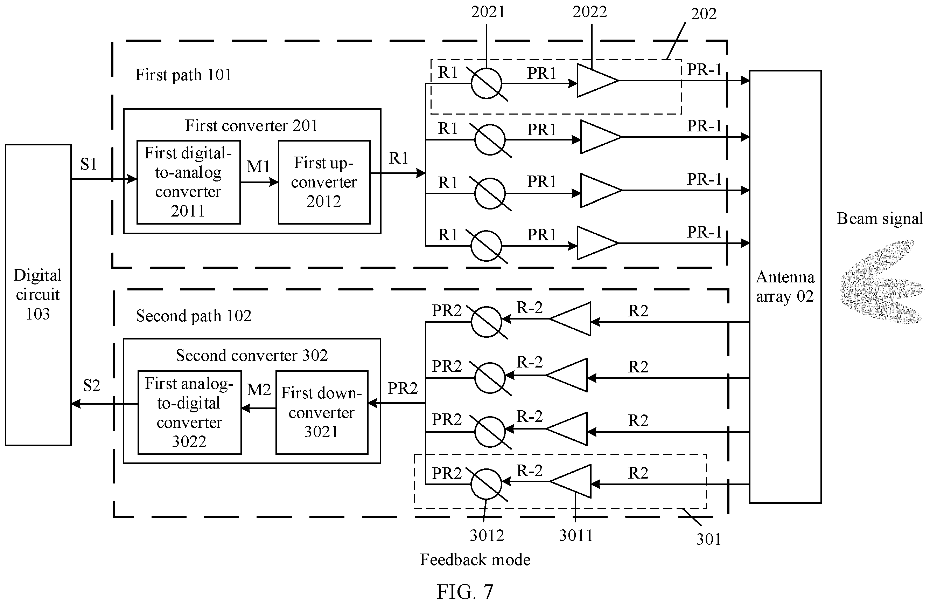

Based on the schematic diagram of the structure of the communication apparatus shown in FIG. 5, FIG. 7 is a schematic diagram of a circuit structure of a communication apparatus according to this embodiment of this application.

The first path of the communication apparatus includes a first converter and a plurality of first transmitting subpaths. The first converter is configured to: convert the first digital signal into a first radio frequency signal; and send the first radio frequency signal to the plurality of first transmitting subpaths separately; and each of the plurality of first transmitting subpaths is configured to perform phase shifting on the first radio frequency signal, to obtain one of the plurality of phase-shifted first radio frequency signals.

The first converter is equivalent to a digital-to-analog converter, and first performs digital-to-analog conversion on the first digital signal to obtain the first radio frequency signal. The plurality of first transmitting subpaths may perform phase shifting at different angles on the received first radio frequency signals, to obtain a plurality of corresponding phase-shifted first radio frequency signals. The plurality of phase-shifted first radio frequency signals have different phases, so that energy of the plurality of phase-shifted first radio frequency signals that are finally output by an air interface is aggregated in a direction, to achieve beamforming effect, form a beam signal, and improve quality of communication with a communication peer end.

As shown in FIG. 7, the first path 101 includes a first converter 201 and a plurality of first transmitting subpaths 202. The first converter 201 converts a received first digital signal S1 sent by the digital circuit 103 into a first radio frequency signal R1, and sends the first radio frequency signal R1 to the plurality of first transmitting subpaths 202 separately. Each of the plurality of first transmitting subpaths 202 is configured to perform phase shifting on the first radio frequency signal R1 to obtain a phase-shifted first radio frequency signal PR1. One first transmitting subpath 202 performs phase shifting on one first radio frequency signal R1 to obtain a first radio frequency signal PR1, and phase-shifted first radio frequency signals PR1 of the first transmitting subpaths 202 have different phases.

As shown in FIG. 7, an input end of the first converter 201 is equivalent to an input end (namely, an input end for receiving a digital signal) of the first path 101, an output end of the first converter 201 is separately coupled to input ends of the plurality of first transmitting subpaths 202, and output ends of the plurality of first transmitting subpaths 202 each are equivalent to an output end (namely, an output end for sending a radio frequency signal) of the first path 101 and are coupled to the antenna array 02.

Optionally, each first transmitting subpath includes a first phase shifter and a first power amplifier.

The first phase shifter is configured to perform phase shifting on the first radio frequency signal to obtain the phase-shifted first radio frequency signal. The first power amplifier is configured to amplify the phase-shifted first radio frequency signal.

As shown in FIG. 7, each first transmitting subpath 202 includes a first phase shifter 2021 and a first power amplifier 2022. The first phase shifter 2021 is configured to perform phase shifting on the first radio frequency signal R1 to obtain the phase-shifted first radio frequency signal PR1. The first power amplifier 2022 is configured to amplify the phase-shifted first radio frequency signal PR1, to obtain an amplified first radio frequency signal PR-1. After the plurality of amplified first radio frequency signals PR-1 are sent through the antenna array 02, a first beam signal may be formed at an air interface.

As shown in FIG. 7, an input end of the first phase shifter 2021 is equivalent to an input end of a first transmitting subpath 202 and is coupled to the output end of the first converter 201, an output end of the first phase shifter 2021 is coupled to an input end of the first power amplifier 2022, and an output end of the first power amplifier 2022 is equivalent to the output end of the first transmitting subpath 202 and is coupled to the antenna array 02. In this embodiment of this application, a simple and effective structure of a first transmitting subpath is provided. The structure may be used to control phase shifting and amplification to be performed on a first radio frequency signal transmitted in each first transmitting subpath.

Optionally, the first converter includes: a first digital-to-analog converter, configured to convert the first digital signal into a first analog signal; and a first up-converter, configured to convert the first analog signal into the first radio frequency signal. A structure of the first converter shown in FIG. 7 includes a digital-to-analog converter and a converter, and may be configured to control digital-to-analog conversion to be performed on a digital signal, to obtain a corresponding analog signal, and perform up-conversion on the analog signal to obtain a corresponding radio frequency signal.

As shown in FIG. 7, the first converter 201 includes a first digital-to-analog converter 2011 and a first up-converter 2012. The first digital-to-analog converter 2011 is configured to convert the first digital signal S1 into a first analog signal M1. The first up-converter 2012 is configured to convert the first analog signal M1 into the first radio frequency signal R1.

As shown in FIG. 7, an input end of the first digital-to-analog converter 2011 is equivalent to an input end of the first converter 201 and is coupled to an output end of the digital circuit 103, an output end of the first digital-to-analog converter 2011 is coupled to an input end of the first up-converter 2012, and an output end of the first up-converter 2012 is equivalent to the output end of the first converter 201 and is coupled to each input end of the plurality of first transmitting subpaths 202.

Optionally, the second path includes a plurality of first receiving subpaths and a second converter. Each of the plurality of first receiving subpaths is configured to: receive one of the plurality of third radio frequency signals; amplify or attenuate the third radio frequency signal to obtain a processed third radio frequency signal; and perform phase shifting on the processed third radio frequency signal to obtain a phase-shifted third radio frequency signal, where the plurality of first receiving subpaths are configured to obtain a plurality of phase-shifted third radio frequency signals. A part or all of the plurality of first receiving subpaths are configured to: receive the plurality of second radio frequency signals; amplify or attenuate the plurality of second radio frequency signals to obtain a plurality of processed second radio frequency signals; and perform phase shifting on the plurality of processed second radio frequency signals to obtain a plurality of phase-shifted second radio frequency signals. The second converter is configured to convert the plurality of phase-shifted third radio frequency signals into the third digital signal, and convert the plurality of phase-shifted second radio frequency signals into the digital feedback signal.

As shown in FIG. 7, the second path 102 includes a plurality of first receiving subpaths 301 and a second converter 302.

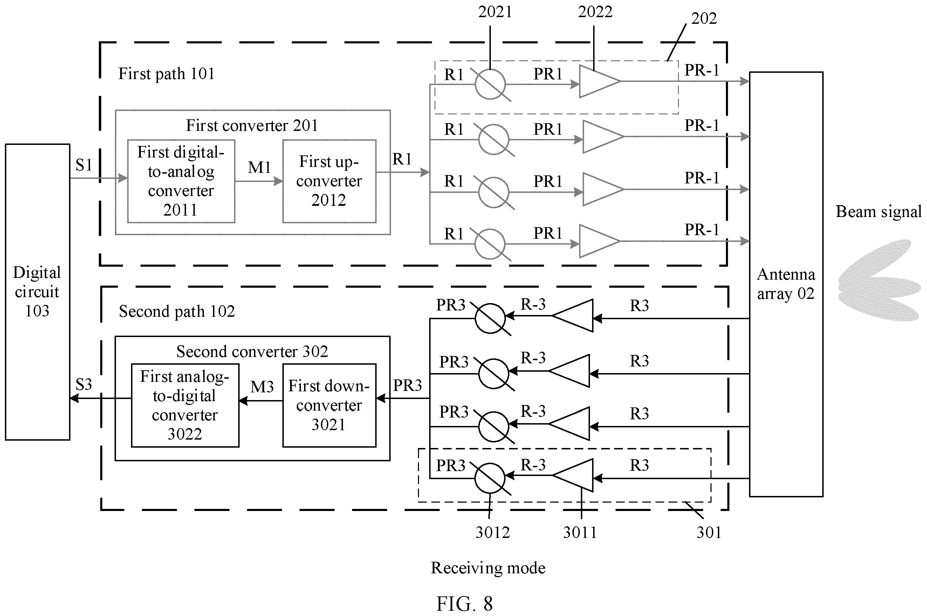

In a receiving mode, FIG. 8 is a schematic diagram of the communication apparatus, shown in FIG. 7, in a receiving mode according to this embodiment of this application. As shown in FIG. 8, each of the plurality of first receiving subpaths 301 is configured to: receive one of the plurality of third radio frequency signals R3; amplify or attenuate the third radio frequency signal R3 to obtain the processed third radio frequency signal R-3; and perform phase shifting on the processed third radio frequency signal R-3 to obtain a phase-shifted third radio frequency signal PR3. The plurality of first receiving subpaths 301 are configured to obtain a plurality of phase-shifted third radio frequency signals PR3. The second converter 302 is configured to convert the plurality of phase-shifted third radio frequency signals PR3 into the third digital signal S3.

In a feedback mode, a part or all of the plurality of first receiving subpaths 301 are configured to: receive the plurality of second radio frequency signals R2; amplify or attenuate the plurality of second radio frequency signals R2 to obtain a plurality of processed second radio frequency signals R-2; and perform phase shifting on the plurality of processed second radio frequency signals R-2 to obtain a plurality of phase-shifted second radio frequency signals PR2. The second converter 302 converts the plurality of phase-shifted second radio frequency signals PR2 into the digital feedback signal S2.

As shown in FIG. 7 and FIG. 8, each input end of the plurality of first receiving subpaths 301 is equivalent to an input end (namely, an input end for receiving a radio frequency signal) of the second path 102 and is coupled to the antenna array 02, output ends of the plurality of first receiving subpaths 301 are separately coupled to an input end of the second converter 302, and an output end of the second converter 302 is equivalent to an output end (namely, an output end for sending a digital signal) of the second path 102 and is coupled to the digital circuit 103.

It should be noted that, as shown in FIG. 7 and FIG. 8, the first transmitting subpath 202 in the first path 101 and the first receiving subpath 301 in the second path 102 one-to-one correspond to, and are respectively connected to the first polarized antenna array element and the second polarized antenna array element of a same dual-polarized antenna unit.

It should be further noted that, in the feedback mode, the plurality of first receiving subpaths 301 in the second path 102 are mainly configured to receive radio frequency signals corresponding to the main beam signal to complete feedback, that is, may be understood as a radio frequency signal with strongest signal strength. Therefore, the plurality of first receiving subpaths 301 in the second path 102 may enable only some of the first receiving subpaths 301 to receive the second radio frequency signal R2, and a specific quantity of enabled first receiving subpaths 301 may be adaptively adjusted according to a layout, a sending feature, or device operating costs of the dual-polarized antenna unit in the antenna array. Details are not described herein in this application.

It should be further noted that, all the plurality of first transmitting subpaths 202 in the first path 101 may send the phase-shifted first radio frequency signals PR-1, or only some of the first transmitting subpaths 202 may be enabled to send the phase-shifted first radio frequency signals PR-1. Correspondingly, in the feedback mode, when the first receiving subpath 301 in the second path 102 receives the second radio frequency signal R2, only a part or all of the first receiving subpaths 301 corresponding to the enabled first transmitting subpath 202 in the first path 101 are enabled.

It should be further noted that the second path 102 has two working modes: a receiving mode and a feedback mode. The receiving mode and the feedback mode are not used to work simultaneously, and only one mode can be used at any moment. In the receiving mode, as shown in FIG. 8, when the second path 102 receives a plurality of third radio frequency signals R3, the first path 101 is in an idle or a disabled state. In the feedback mode, as shown in FIG. 7, when the first path 101 is in a working state, that is, when a plurality of amplified first radio frequency signals PR-1 are sent, the second path 102 is correspondingly enabled to receive at least one second radio frequency signal R2.

Optionally, each of the plurality of first receiving subpaths includes a first low noise amplifier and a second phase shifter. The first low noise amplifier is configured to: amplify or attenuate the third radio frequency signal to obtain the processed third radio frequency signal; and amplify or attenuate at least one of the plurality of second radio frequency signals to obtain at least one processed second radio frequency signal. The second phase shifter is configured to: perform phase shifting on the processed third radio frequency signal to obtain a phase-shifted third radio frequency signal; and perform phase shifting on the at least one processed second radio frequency signal to obtain at least one of the plurality of phase-shifted second radio frequency signals.

As shown in FIG. 7, in the feedback mode, each first receiving subpath 301 includes a first low noise amplifier 3011 and a second phase shifter 3012. The first low noise amplifier 3011 is configured to amplify or attenuate at least one of the plurality of second radio frequency signals R2 to obtain at least one processed second radio frequency signal R-2. The second phase shifter 3012 is configured to perform phase shifting on the at least one processed second radio frequency signal R-2 to obtain at least one of the plurality of phase-shifted second radio frequency signals PR2. After the plurality of amplified first radio frequency signals PR-1 are sent through the antenna array 02, a first beam signal may be formed at an air interface.

As shown in FIG. 8, in the receiving mode, each first receiving subpath 301 includes a first low noise amplifier 3011 and a second phase shifter 3012. The first low noise amplifier 3011 is configured to amplify or attenuate the third radio frequency signal R3 to obtain the processed third radio frequency signal R-3. The second phase shifter 3012 is configured to perform phase shifting on the processed third radio frequency signal R3 to obtain a phase-shifted third radio frequency signal PR3.

As shown in FIG. 7 and FIG. 8, an input end of the first low noise amplifier 3011 is equivalent to an input end of a first receiving subpath 301, an output end of the first low noise amplifier 3011 is coupled to an input end of the second phase shifter 3012, and an output end of the second phase shifter 3012 is equivalent to an output end of the first receiving subpath 301 and is coupled to an input end of the second converter 302. The structure of the first receiving subpath 301 shown in FIG. 7 and FIG. 8 may be used to control related amplification or attenuation and phase shifting to be performed on the second radio frequency signal R2 or the third radio frequency signal R3 transmitted in each first receiving subpath.

It should be noted that each enabled first receiving subpath 301 can receive and process one second radio frequency signal R2. However, in the feedback mode, a quantity of enabled first receiving subpaths 301 may be adaptively adjusted. Therefore, the second path 102 can receive and process at least one of a plurality of second radio frequency signals R2.

It should be further noted that, in the feedback mode, a phase weight adjusted for the radio frequency signal by the second phase shifter 3012 in each enabled first receiving subpath 301 in the second path 102 is exactly an inverse of a phase weight adjusted for the radio frequency signal by the first phase shifter 2021 in each enabled first transmitting subpath 202 in the first path 101. For example, as shown in FIG. 7, weights of the first phase shifter 2021 on each enabled first transmitting subpath 202 in the first path 101 are separately configured as *e*^{*-jπ*/2}*, e*^{*-jπ*/4}, *e*^{*jπ*/4}, *e*^{*jπ*/2}, and weights of the second phase shifter 3012 on the corresponding enabled first receiving subpath 301 in the second path 102 are separately configured as *e*^{*jπ*/2}, *e*^{*jπ*/4}, *e*^{*-jπ*/4}, *e*^{*-jπ*/2}*.* That is, the first phase shifter 2021 in each first transmitting subpath 202 one-to-one corresponds to the second phase shifter 3012 in the first receiving subpath 301.

It should be further noted that the first phase shifter 2021 in each first transmitting subpath 202 and/or the second phase shifter 3012 in the first receiving subpath 301 may be separate phase shifter devices/device, or may be an entire phase-shift network having a plurality of output ends. Each output end of the phase-shift network may output radio frequency signals with different phase-shift weights. This is not specifically limited in embodiments of this application. Optionally, the second converter includes: a first down-converter, configured to: convert the plurality of phase-shifted third radio frequency signals into a third analog signal, and convert the plurality of phase-shifted second radio frequency signals into a second analog signal; and a first analog-to-digital converter, configured to: convert the third analog signal into the third digital signal, and convert the second analog signal into the digital feedback signal.

As shown in FIG. 7, the second converter 302 includes a first down-converter 3021 and a first analog-to-digital converter 3022, where the first down-converter 3021 is configured to convert the plurality of phase-shifted second radio frequency signals PR2 into a second analog signal M2; and the first analog-to-digital converter is configured to convert the second analog signal M2 into the digital feedback signal S2.

As shown in FIG. 8, the second converter 302 includes a first down-converter 3021 and a first analog-to-digital converter 3022, where the first down-converter 3021 is configured to convert the plurality of phase-shifted third radio frequency signals PR3 into a third analog signal M3, and the first analog-to-digital converter 3022 is configured to convert the third analog signal M3 into the third digital signal S3.

As shown in FIG. 7 and FIG. 8, an input end of the first analog-to-digital converter 3022 is equivalent to an input end of the second converter 302 and is coupled to an output end of a plurality of first receiving subpaths 301, an output end of the first analog-to-digital converter 3022 is coupled to an input end of the first down-converter 3021, and an output end of the first down-converter 3021 is equivalent to an output end of the second converter 302 and is coupled to a digital circuit 103.

The first down-converter is configured to perform down-conversion on signals (for example, the plurality of phase-shifted second radio frequency signals PR2 or the plurality of phase-shifted third radio frequency signals PR3) that are output on a plurality of first receiving subpaths 301, so that signals in different first receiving subpaths 301 are combined.

Optionally, the first path further includes a plurality of second receiving subpaths and a third converter. Each second receiving subpath of the plurality of second receiving subpaths is configured to: receive one of a plurality of fourth radio frequency signals from the antenna array; amplify or attenuate the fourth radio frequency signal to obtain a processed fourth radio frequency signal; and perform phase shifting on the processed fourth radio frequency signal to obtain a phase-shifted fourth radio frequency signal; and the plurality of second receiving subpaths are configured to obtain a plurality of phase-shifted fourth radio frequency signals. The third converter is further configured to convert the plurality of phase-shifted fourth radio frequency signals into a fourth digital signal. The digital circuit is further configured to process the fourth digital signal.

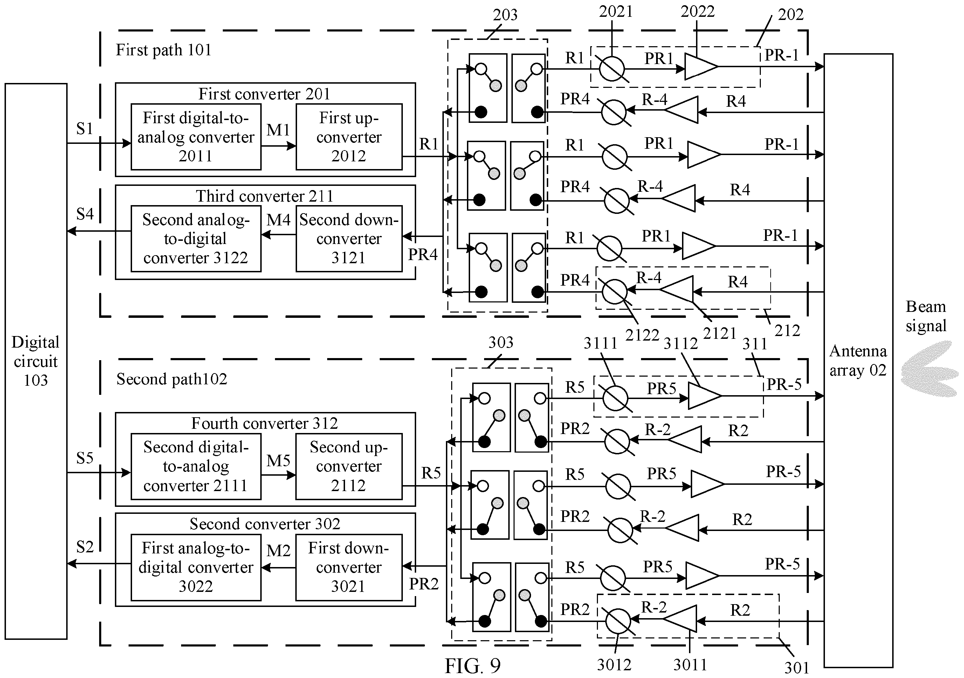

FIG. 9 is a schematic diagram of a circuit structure of another communication apparatus according to an embodiment of this application. As shown in FIG. 9, the first path 101 further includes a plurality of second receiving subpaths 212 and a third converter 211. Each second receiving subpath 212 of the plurality of second receiving subpaths 212 is configured to: receive one of a plurality of fourth radio frequency signals R4 from the antenna array 02; amplify or attenuate the fourth radio frequency signal R4 to obtain the processed fourth radio frequency signal R-4; and perform phase shifting on the processed fourth radio frequency signal R-4 to obtain a phase-shifted fourth radio frequency signal PR4; and the plurality of second receiving subpaths 212 are configured to obtain a plurality of phase-shifted fourth radio frequency signals PR4. The third converter 211 is further configured to convert the plurality of phase-shifted fourth radio frequency signals PR4 into a fourth digital signal S4. The digital circuit 103 is further configured to process the fourth digital signal S4.

As shown in FIG. 9, each input end of the plurality of second receiving subpaths 212 is equivalent to an input end (namely, an input end for receiving a radio frequency signal) of the first path 101 and is coupled to the antenna array 02, output ends of the plurality of second receiving subpaths 212 are separately coupled to an input end of the third converter 211, and an output end of the third converter 211 is equivalent to an output end (namely, an output end for sending a digital signal) of the first path 101 and is coupled to the digital circuit 103.

In addition to the first converter and the plurality of corresponding first transmitting subpaths, the first path further includes a third converter and a plurality of corresponding second receiving subpaths. A function of the plurality of second receiving subpaths is consistent with a function of the plurality of first receiving subpaths in the second path in a receiving mode, and the plurality of second receiving subpaths and the plurality of first receiving subpaths can receive a radio frequency signal from a communication peer end and perform corresponding processing. However, when the first path sends a plurality of phase-shifted first radio frequency signals through the plurality of first transmitting subpaths, the plurality of second receiving subpaths cannot receive the second radio frequency signal, that is, there is no feedback mode.

Optionally, each of the plurality of second receiving subpaths includes a second low noise amplifier and a third phase shifter. The second low noise amplifier is configured to amplify or attenuate the fourth radio frequency signal to obtain the processed fourth radio frequency signal. The third phase shifter is configured to perform phase shifting on the processed fourth radio frequency signal to obtain the phase-shifted fourth radio frequency signal.

As shown in FIG. 9, each second receiving subpath 212 of the plurality of second receiving subpaths 212 includes a second low noise amplifier 2121 and a third phase shifter 2122. The second low noise amplifier 2121 is configured to amplify or attenuate the fourth radio frequency signal R4 to obtain the processed fourth radio frequency signal R-4. The third phase shifter 2122 is configured to perform phase shifting on the processed fourth radio frequency signal R-4 to obtain the phase-shifted fourth radio frequency signal PR4.

As shown in FIG. 9, an input end of the second low noise amplifier 2121 is equivalent to an input end of a second receiving subpath 212, an output end of the second low noise amplifier 2121 is coupled to an input end of the third phase shifter 2122, and an output end of the third phase shifter 2122 is equivalent to an output end of the second receiving subpath 212 and is coupled to an input end of the third converter 211. The structure of the first receiving subpath 301 shown in FIG. 7 and FIG. 8 and the structure of the second receiving subpath 212 shown in FIG. 9 may also be used to control related amplification or attenuation and phase shifting to be performed on the fourth radio frequency signal R4 transmitted in each first receiving subpath.

Optionally, the third converter includes: a second down-converter, configured to convert the plurality of phase-shifted fourth radio frequency signals into a fourth analog signal; and a second analog-to-digital converter, configured to convert the fourth analog signal into the fourth digital signal.

As shown in FIG. 9, the third converter 211 includes: a second down-converter 3121, configured to convert the plurality of phase-shifted fourth radio frequency signals PR4 into a fourth analog signal M4; and a second analog-to-digital converter 3122, configured to convert the fourth analog signal M4 into the fourth digital signal S4.

As shown in FIG. 9, an input end of the second analog-to-digital converter 3122 is equivalent to an input end of the third converter 211 and is coupled to an output end of a plurality of second receiving subpaths 212, an output end of the second analog-to-digital converter 3122 is coupled to an input end of the second down-converter 3121, and an output end of the second down-converter 3121 is equivalent to an output end of the third converter 211 and is coupled to a digital circuit 103.

Optionally, the first path further includes a first switch module, and the first switch module is configured to control the plurality of first transmitting subpaths or the plurality of second receiving subpaths in the first path to be connected within different time periods.

As shown in FIG. 9, the first path 101 further includes a first switch module 203, and the first switch module 203 is configured to control the plurality of first transmitting subpaths 202 or the plurality of second receiving subpaths 212 in the first path 101 to be connected within different time periods.

It should be noted that, because the communication apparatus in this embodiment of this application is applicable to a TDD communication system, the first switch module 203 controls only one type of subpath to be connected at a same moment. That is, it may be understood that receiving a radio frequency signal and sending a radio frequency signal are not performed simultaneously on a same path.

Optionally, the second path further includes a plurality of second transmitting subpaths and a fourth converter; the digital circuit is further configured to generate a fifth digital signal; the fourth converter is further configured to: convert the fifth digital signal into a fifth radio frequency signal; and send the fifth radio frequency signal to the plurality of second transmitting subpaths separately; and each of the plurality of second transmitting subpaths is configured to perform phase shifting on the fifth radio frequency signal to obtain one phase-shifted fifth radio frequency signal, and the plurality of second transmitting subpaths are configured to obtain a plurality of phase-shifted fifth radio frequency signals, where the plurality of phase-shifted fifth radio frequency signals have different phases; and send the plurality of phase-shifted fifth radio frequency signals to the antenna array.

As shown in FIG. 9, the second path 102 further includes a plurality of second transmitting subpaths 311 and a fourth converter 312; the digital circuit 103 is further configured to generate a fifth digital signal; the fourth converter 312 is further configured to: convert the fifth digital signal S5 into a fifth radio frequency signal R5; and send the fifth radio frequency signal R5 to the plurality of second transmitting subpaths 311 separately; and each second transmitting subpath 311 of the plurality of second transmitting subpaths 311 is configured to perform phase shifting on the fifth radio frequency signal R5 to obtain one phase-shifted fifth radio frequency signal PR5, and the plurality of second transmitting subpaths 311 are configured to obtain a plurality of phase-shifted fifth radio frequency signals PR5, where the plurality of phase-shifted fifth radio frequency signals PR5 have different phases; and send the plurality of phase-shifted fifth radio frequency signals to the antenna array.

As shown in FIG. 9, an input end of the fourth converter 312 is equivalent to an input end (namely, an input end for receiving a digital signal) of the second path 102, an output end of the fourth converter 312 is separately coupled to input ends of the plurality of second transmitting subpaths 311, and each output end of the plurality of second transmitting subpaths 311 is equivalent to an output end (namely, an output end for sending a radio frequency signal) of the second path 102 and is coupled to the antenna array 02.

In addition to the second converter and the plurality of corresponding first receiving subpaths, the second path further includes a fourth converter and a plurality of corresponding second transmitting subpaths. A function of the plurality of second transmitting subpaths is consistent with a function of the plurality of first transmitting subpaths of the first path, and the plurality of second transmitting subpaths and the plurality of first transmitting subpaths can send signals to the communication peer end.

Optionally, each second transmitting subpath includes a fourth phase shifter and a second power amplifier. The fourth phase shifter is configured to perform phase shifting on the fifth radio frequency signal to obtain the phase-shifted fifth radio frequency signal. The second power amplifier is configured to amplify the phase-shifted fifth radio frequency signal.

As shown in FIG. 9, each second transmitting subpath 311 includes a fourth phase shifter 3111 and a second power amplifier 3112. The fourth phase shifter 3111 is configured to perform phase shifting on the fifth radio frequency signal R5 to obtain the phase-shifted fifth radio frequency signal PR5. The second power amplifier 3112 is configured to amplify the phase-shifted fifth radio frequency signal PR-5.

As shown in FIG. 9, an input end of the fourth phase shifter 3111 is equivalent to an input end of a second transmitting subpath 311 and is coupled to an output end of the fourth converter 312, an output end of the fourth phase shifter 3111 is coupled to an input end of the second power amplifier 3112, and an output end of the second power amplifier 3112 is equivalent to an output end of the second transmitting subpath 311 and is coupled to the antenna array 02.

In this embodiment of this application, the communication apparatus provides a simple and effective second transmitting subpath structure. The structure may be used to control phase shifting and amplification to be performed on a fifth radio frequency signal transmitted on each second transmitting subpath, to improve quality of communication with the communication peer end. Optionally, the fourth converter includes: a second digital-to-analog converter, configured to convert the fifth digital signal into a fifth analog signal; and a second up-converter, configured to convert the fifth analog signal into the fifth radio frequency signal.

As shown in FIG. 9, the fourth converter 312 includes: a second digital-to-analog converter 2111, configured to convert the fifth digital signal S5 into a fifth analog signal M5; and a second up-converter 2112, configured to convert the fifth analog signal M5 into the fifth radio frequency signal R5.

As shown in FIG. 9, an input end of the second digital-to-analog converter 2111 is equivalent to an input end of the fourth converter 312 and is coupled to an output end of the digital circuit 103, an output end of the second digital-to-analog converter 2111 is coupled to an input end of the second up-converter 2112, and an output end of the second up-converter 2112 is equivalent to an output end of the fourth converter 312 and is coupled to each input end of the plurality of second transmitting subpaths 311.

Optionally, the second path further includes a second switch module, and the second switch module is configured to control the plurality of first receiving subpaths or the plurality of second transmitting subpaths in the second path to be connected within different time periods.

As shown in FIG. 9, the second path 102 further includes a second switch module 303, and the second switch module 303 is configured to control the plurality of first receiving subpaths 301 or the plurality of second transmitting subpaths 311 in the second path 102 to be connected within different time periods.

It should be noted that, as shown in FIG. 9, both the first path 101 and the second path 102 include subpaths configured to receive or send signals, the plurality of second receiving subpaths 212 and the plurality of first transmitting subpaths 202 in the first path 101 are all connected to the first polarized antenna array element in the antenna array 02, and the plurality of first receiving subpaths 301 and the plurality of second transmitting subpaths 311 in the second path 102 are all connected to the first polarized antenna array element in the antenna array 02.

It should be further noted that, as shown in FIG. 9, the first switch module 203 and the second switch module 303 are independent of each other and are separately configured to control receiving and sending signals sent through the first path 101 and the second path 102. Therefore, it may be understood that the first path 101 and the second path 102 may be simultaneously configured to receive signals, that is, the plurality of second receiving subpaths 212 and the plurality of first receiving subpaths 301 are both configured to receive a radio frequency signal from the communication peer end. In this case, the communication apparatus has no feedback mode. The first path 101 and the second path 102 may also be simultaneously configured to send signals, that is, the plurality of first transmitting subpaths 202 and the plurality of second transmitting subpaths 311 are both configured to send a radio frequency signal from a local end. In this case, because both the first path 101 and the second path 102 are in a working state, and there is no idle communication path to receive a radio frequency signal sent by the local end, the communication apparatus does not have a feedback mode in this case. When one of the first path 101 and the second path 102 is configured to receive a signal, the other is configured to send a signal, that is, only a plurality of first transmitting subpaths 202 or only a plurality of second transmitting subpaths 311 are configured to send a radio frequency signal from the local end, and the plurality of corresponding first receiving subpaths 301 or the plurality of corresponding second receiving subpaths 212 are configured to receive a radio frequency signal from a communication peer end. Therefore, when the radio frequency signal from the local end is sent, because the communication apparatus in this embodiment of this application is used in the TDD communication system, in this embodiment of this application, the plurality of first receiving subpaths 301 corresponding to the communication apparatus or the plurality of second receiving subpaths 212 corresponding to the communication apparatus may be multiplexed to receive the radio frequency signal from the local end, to complete feedback.

It may be understood that in the radio frequency transceiver system shown in FIG. 5 and FIG. 7 to FIG. 9, quantities of the first paths 101 and the second paths 102 are only examples of quantities in this embodiment of this application. This is not specifically limited in embodiments of this application. For example, the communication apparatus may separately include sets of radio frequency transceiver systems, that is, include a plurality of first paths 101 and a plurality of second paths 102, where the first paths 101 one-to-one correspond to the second paths 102. Similarly, a quantity of digital circuits corresponding to the radio frequency transceiver system is not specifically limited in embodiments of this application. For example, one digital circuit may correspond to one radio frequency transceiver system, and one digital circuit may also correspond to a plurality of radio frequency transceiver systems.

It may be further understood that the communication apparatuses shown in FIG. 5 and FIG. 7 to FIG. 9 are only example apparatus structures provided in embodiments of this application. Other devices further included in the communication apparatus are not specifically limited in embodiments of this application. For example, the communication apparatus may further include, between the first path and the antenna array, a circulator configured to control transmission of a radio frequency signal, to smoothly receive and send a signal through different interfaces.

In the feedback solution in the conventional technology, a set of receiving antennas needs to be independently configured to collect a beam signal from a far field over the air interface, and then transmit the beam signal to a receiver through a radio frequency cable for solving. This has a great impact on an actual product form and has high costs. Therefore, in the communication apparatus provided in the first aspect of this application, in the feedback mode, an original idle receive path may be multiplexed to receive a signal sent by a local end, to feed back the signal to the digital circuit to perform digital signal compensation on signals sent by a plurality of local ends. It is noted in advance that the communication apparatus provided in embodiments of the first aspect of this application is a communication apparatus applicable to a time division duplex communication system. Therefore, when the communication apparatus sends a plurality of communication signals (namely, the plurality of phase-shifted first radio frequency signals) to the communication peer end through a sending path (namely, the first path), the communication peer end does not send a communication signal to the communication apparatus. Therefore, an original receive path (for example, the second path) of the communication apparatus is in an idle or a disabled state, that is, the receive path does not need to receive the communication signal from the communication peer end. Therefore, when the plurality of phase-shifted first radio frequency signals are sent to the antenna array through the first path of the communication apparatus, the communication apparatus in this embodiment of this application may enable the idle or disabled second path, so that the second path is in a working state in the feedback mode, to receive the plurality of second radio frequency signals from the antenna array. Then, the second path may generate the digital feedback signal based on the plurality of second radio frequency signals, and feed back the digital feedback signal to the digital circuit, to form a feedback loop. The digital circuit may perform digital signal compensation on the first digital signal based on the digital feedback signal, to improve communication quality of the communication signal. It can be learned from the foregoing description that, the feedback loop is formed based on a local receive path of the communication apparatus, and there is no need to additionally set a separate receive path inside and outside the communication apparatus. This greatly reduces space and costs of the communication apparatus. In addition, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. Therefore, information fed back by the digital feedback signal is a combination signal in the main beam direction, and is not a separate radio frequency signal. This resolves a problem of "one-to-many" in this scenario. In addition, when the second path is in the receiving mode, that is, when the first path does not send a first beam signal, the second path may be configured to normally receive a communication signal from the communication peer end to perform normal communication. In conclusion, in this embodiment of this application, a receive path in an idle or a disabled state may be multiplexed to receive a communication signal sent by a local transmit path, and feed back the communication signal to the digital circuit, so that the digital circuit implements "one-to-many" digital signal compensation on a transmitting signal. This greatly reduces costs and space of a communication device.

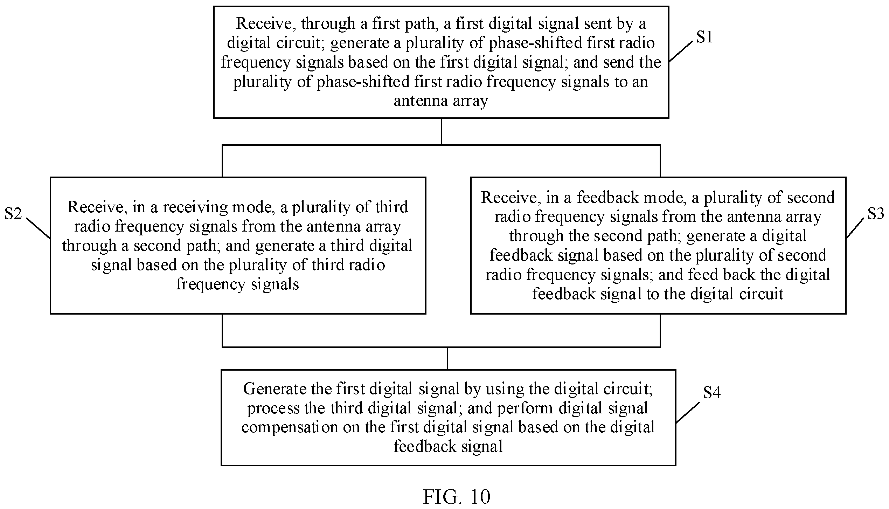

Based on the foregoing communication system architecture and communication apparatus, an embodiment of this application further provides a communication method, used in the foregoing communication apparatus. The communication apparatus includes a first path, a second path, and a digital circuit. FIG. 10 is a schematic flowchart of a communication method according to an embodiment of this application. As shown in FIG. 10, the method includes the following steps. Step S1: Receive, through a first path, a first digital signal sent by a digital circuit; generate a plurality of phase-shifted first radio frequency signals based on the first digital signal; and send the plurality of phase-shifted first radio frequency signals to an antenna array.

Specifically, a communication apparatus receives, through the first path, the first digital signal sent by the digital circuit; generates, based on the first digital signal, the plurality of phase-shifted first radio frequency signals, where the plurality of phase-shifted first radio frequency signals have different phases; and sends the plurality of phase-shifted first radio frequency signals to the antenna array. The first path may send the plurality of phase-shifted first radio frequency signals through the antenna array, to form a beam signal at an air interface, and communicate with a communication peer end.

Optionally, the first path includes a first converter and a plurality of first transmitting subpaths; and the generating a plurality of phase-shifted first radio frequency signals based on the first digital signal includes: converting the first digital signal into a first radio frequency signal via the first converter; and sending the first radio frequency signal to the plurality of first transmitting subpaths separately; and performing phase shifting on the first radio frequency signal through each of the plurality of first transmitting subpaths, to obtain one of the plurality of phase-shifted first radio frequency signals.

Optionally, each first transmitting subpath includes a first phase shifter and a first power amplifier; and the performing phase shifting on the first radio frequency signal through each of the plurality of first transmitting subpaths, to obtain one of the plurality of phase-shifted first radio frequency signals includes: performing phase shifting on the first radio frequency signal via the first phase shifter, to obtain the phase-shifted first radio frequency signal; and amplifying the phase-shifted first radio frequency signal via the first power amplifier.

Optionally, the first converter includes a first digital-to-analog converter and a first up-converter; and the converting the first digital signal into a first radio frequency signal via the first converter includes: converting the first digital signal into a first analog signal via the first digital-to-analog converter; and converting the first analog signal into the first radio frequency signal via the first up-converter.

Optionally, the first path further includes a plurality of second receiving subpaths and a third converter; and the method further includes: receiving one fourth radio frequency signal in a plurality of fourth radio frequency signals from the antenna array through each of the plurality of second receiving subpaths; amplifying or attenuating the fourth radio frequency signal to obtain the processed fourth radio frequency signal; performing phase shifting on the processed fourth radio frequency signal to obtain a phase-shifted fourth radio frequency signal, where the plurality of second receiving subpaths are configured to obtain a plurality of phase-shifted fourth radio frequency signals; converting the plurality of phase-shifted fourth radio frequency signals into a fourth digital signal via the third converter; and processing the fourth digital signals by using the digital circuit.

Optionally, each of the plurality of second receiving subpaths includes a second low noise amplifier and a third phase shifter; and the amplifying or attenuating the fourth radio frequency signal to obtain the processed fourth radio frequency signal includes: amplifying or attenuating the fourth radio frequency signal via the second low noise amplifier to obtain the processed fourth radio frequency signal; and performing phase shifting on the processed fourth radio frequency signal via the third phase shifter to obtain a phase-shifted fourth radio frequency signal.

Optionally, the third converter includes a second down-converter and a second analog-to-digital converter; and the converting the plurality of phase-shifted fourth radio frequency signals into a fourth digital signal via the third converter includes: converting the plurality of phase-shifted fourth radio frequency signals into a fourth analog signal via the second down-converter; and converting the fourth analog signal into the fourth digital signal via the second analog-to-digital converter.

Optionally, the first path further includes a first switch module; and the method further includes: controlling, via the first switch module, the plurality of first transmitting subpaths or the plurality of second receiving subpaths in the first path to be connected within different time periods.

Step S2: Receive, in a receiving mode, a plurality of third radio frequency signals from the antenna array through the second path; and generate a third digital signal based on the plurality of third radio frequency signals.

Specifically, in the receiving mode, the plurality of third radio frequency signals from the antenna array are received through the second path, where the plurality of third radio frequency signals are from the communication peer end; and the third digital signal is generated based on the plurality of third radio frequency signals. When the second path is in the receiving mode, that is, when the first path does not send a first beam signal, the second path may be configured to normally receive a communication signal from the communication peer end to perform normal communication interaction.

Step S3: Receive, in a feedback mode, a plurality of second radio frequency signals from the antenna array through the second path; generate a digital feedback signal based on the plurality of second radio frequency signals; and feed back the digital feedback signal to the digital circuit. Specifically, in the feedback mode, the plurality of second radio frequency signals from the antenna array are received through the second path, where the plurality of second radio frequency signals are obtained by coupling a plurality of phase-shifted first radio frequency signals; a digital feedback signal is generated based on the plurality of second radio frequency signals; and the digital feedback signal is fed back to the digital circuit. In the feedback mode, the second path may multiplex an original idle receive path to receive a signal sent by a local end, to feed back the signal to the digital circuit to perform digital signal compensation on signals sent by a plurality of local ends. In addition, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. This resolves a problem of "one-to-many" in this scenario.

Optionally, the second path includes a plurality of first receiving subpaths and a second converter; the receiving a plurality of third radio frequency signals from the antenna array through the second path includes: receiving one of the plurality of third radio frequency signals through each of the plurality of first receiving subpaths; amplifying or attenuating the third radio frequency signal to obtain the processed third radio frequency signal; and performing phase shifting on the processed third radio frequency signal to obtain a phase-shifted third radio frequency signal, where the plurality of first receiving subpaths are configured to obtain a plurality of phase-shifted third radio frequency signals; and the generating a third digital signal based on the plurality of third radio frequency signals includes: converting the plurality of phase-shifted third radio frequency signals into the third digital signal via the second converter.

Optionally, the receiving a plurality of second radio frequency signals from the antenna array through the second path includes: receiving the plurality of second radio frequency signals through a part or all of the plurality of first receiving subpaths; amplifying or attenuating the plurality of second radio frequency signals to obtain a plurality of processed second radio frequency signals; and performing phase shifting on the plurality of processed second radio frequency signals to obtain a plurality of phase-shifted second radio frequency signals; and the generating a digital feedback signal based on the plurality of second radio frequency signals includes: converting the plurality of phase-shifted second radio frequency signals into the digital feedback signal via the second converter.

Optionally, each of the plurality of first receiving subpaths includes a first low noise amplifier and a second phase shifter; the amplifying or attenuating the third radio frequency signal to obtain the processed third radio frequency signal includes: amplifying or attenuating the third radio frequency signal via the first low noise amplifier to obtain the processed third radio frequency signal; the amplifying or attenuating the plurality of second radio frequency signals to obtain a plurality of processed second radio frequency signals includes: amplifying or attenuating at least one of the plurality of second radio frequency signals via the first low noise amplifier, to obtain at least one processed second radio frequency signal; the performing phase shifting on the processed third radio frequency signal to obtain a phase-shifted third radio frequency signal includes: performing phase shifting on the processed third radio frequency signal via the second phase shifter to obtain the phase-shifted third radio frequency signal; and the performing phase shifting on the plurality of processed second radio frequency signals to obtain a plurality of phase-shifted second radio frequency signals includes: performing phase shifting on the at least one processed second radio frequency signal via the second phase shifter to obtain at least one of the plurality of phase-shifted second radio frequency signals.

Optionally, the second converter includes a first down-converter and a first analog-to-digital converter; the converting the plurality of phase-shifted third radio frequency signals into the third digital signal via the second converter includes: converting the plurality of phase-shifted third radio frequency signals into a third analog signal via the first down-converter; and converting the third analog signal into the third digital signal via the first analog-to-digital converter; and the converting the plurality of phase-shifted second radio frequency signals into the digital feedback signal via the second converter includes: converting the plurality of phase-shifted second radio frequency signals into a second analog signal via the first down-converter; and converting the second analog signal into the digital feedback signal via the first analog-to-digital converter.

Optionally, the second path further includes a plurality of second transmitting subpaths and a fourth converter; and the method further includes: generating a fifth digital signal by using the digital circuit; converting the fifth digital signal into a fifth radio frequency signal via the fourth converter; sending the fifth radio frequency signal to the plurality of second transmitting subpaths separately; performing phase shifting on the fifth radio frequency signal through each of the plurality of second transmitting subpaths to obtain one phase-shifted fifth radio frequency signal, and obtaining a plurality of phase-shifted fifth radio frequency signals through the plurality of second transmitting subpaths, where the plurality of phase-shifted fifth radio frequency signals have different phases; and sending the plurality of phase-shifted fifth radio frequency signals to the antenna array.

Optionally, each second transmitting subpath includes a fourth phase shifter and a second power amplifier; and the performing phase shifting on the fifth radio frequency signal through each of the plurality of second transmitting subpaths, to obtain one phase-shifted fifth radio frequency signal includes: performing phase shifting on the fifth radio frequency signal via the first phase shifter, to obtain the phase-shifted fifth radio frequency signal; and amplifying the phase-shifted fifth radio frequency signal via the second power amplifier.

Optionally, the fourth converter includes a second digital-to-analog converter and a second up-converter; and the converting the fifth digital signal into a fifth radio frequency signal via the fourth converter includes: converting the fifth digital signal into a fifth analog signal via the second digital-to-analog converter; and converting the fifth analog signal into the fifth radio frequency signal via the second up-converter.

Optionally, the second path further includes a second switch module; and the method further includes: controlling, via the second switch module, the plurality of first receiving subpaths or the plurality of second transmitting subpaths in the second path to be connected within different time periods.

Step S4: Generate the first digital signal by using the digital circuit; process the third digital signal; and perform digital signal compensation on the first digital signal based on the digital feedback signal.

Specifically, the communication apparatus generates the first digital signal by using the digital circuit, processes the third digital signal, and performs digital signal compensation on the first digital signal based on the digital feedback signal. The digital circuit may be configured to: support a case in which the plurality of phase-shifted first radio frequency signals are sent through the first path; and receive and process the third radio frequency signal sent by the communication peer end. The digital circuit may be configured to perform digital signal compensation on the first digital signal based on the digital feedback signal, to adjust the plurality of phase-shifted first radio frequency signals sent through the first path. This can improve communication quality.

Optionally, the digital signal compensation includes one or more of digital predistortion DPD processing, in-phase-quadrature I-Q mismatch imbalance compensation, direct current offset compensation, intermodulation harmonic compensation, and transmitting signal power control. Optionally, the digital circuit includes a baseband processor.

Optionally, the apparatus further includes the antenna array. The antenna array includes a plurality of dual-polarized antenna units, each dual-polarized antenna unit of the plurality of dual-polarized antenna units includes a first polarized antenna array element and a second polarized antenna array element, and the first polarized antenna array element and the second polarized antenna array element are connected and have different polarization directions. The first polarized antenna array element is connected to the first path, and the second polarized antenna array element is connected to the second path.

In the feedback solution in the conventional technology, a set of receiving antennas needs to be independently configured to collect a beam signal from a far field over the air interface, and then transmit the beam signal to a receiver through a radio frequency cable for solving. This has a great impact on an actual product form and has high costs. Therefore, in the communication apparatus provided in the first aspect of this application, in the feedback mode, an original idle receive path may be multiplexed to receive a signal sent by a local end, to feed back the signal to the digital circuit to perform digital signal compensation on signals sent by a plurality of local ends. It is noted in advance that the communication apparatus provided in embodiments of the first aspect of this application is a communication apparatus applicable to a time division duplex communication system. Therefore, when the communication apparatus sends a plurality of communication signals (namely, the plurality of phase-shifted first radio frequency signals) to the communication peer end through a sending path (namely, the first path), the communication peer end does not send a communication signal to the communication apparatus. Therefore, an original receive path (for example, the second path) of the communication apparatus is in an idle or a disabled state, that is, the receive path does not need to receive the communication signal from the communication peer end. Therefore, when the plurality of phase-shifted first radio frequency signals are sent to the antenna array through the first path of the communication apparatus, the communication apparatus in this embodiment of this application may enable the idle or disabled second path, so that the second path is in a working state in the feedback mode, to receive the plurality of second radio frequency signals from the antenna array. Then, the second path may generate the digital feedback signal based on the plurality of second radio frequency signals, and feed back the digital feedback signal to the digital circuit, to form a feedback loop. The digital circuit may perform digital signal compensation on the first digital signal based on the digital feedback signal, to improve communication quality of the communication signal. It can be learned from the foregoing description that, the feedback loop is formed based on a local receive path of the communication apparatus, and there is no need to additionally set a separate receive path inside and outside the communication apparatus. This greatly reduces space and costs of the communication apparatus. In addition, the plurality of second radio frequency signals are obtained by coupling the plurality of phase-shifted first radio frequency signals through the antenna array, and are not a plurality of phase-shifted first radio frequency signals that are directly obtained. That is, the digital feedback signal obtained through the second path is a combination of output signals of a plurality of first power amplifiers over an air interface, namely, a signal in a main beam direction. Therefore, information fed back by the digital feedback signal is a combination signal in the main beam direction, and is not a separate radio frequency signal. This resolves a problem of "one-to-many" in this scenario.

It should be noted that for the communication apparatus mentioned in this embodiment of this application, correspondingly refer to the communication apparatuses in FIG. 3 to FIG. 9. Details are not described in this embodiment of this application.

It should be further noted that, for beneficial effect of step S1 to step S4 and descriptions of other related functions in this embodiment of this application, refer to the descriptions in the foregoing apparatus embodiment. Details are not described again in this embodiment of this application.

In another embodiment of this application, a chip module, a chip, and a package substrate are further provided. The chip is fastened to the package substrate, the chip includes the communication apparatus provided in any one of the possible implementations provided above, and the package substrate may include the antenna array provided above. For example, the package substrate includes an antenna array having a plurality of dual-polarized antenna units, each dual-polarized antenna unit includes a first polarized antenna array element and a second polarized antenna array element, and the first polarized antenna array element and the second polarized antenna array element are coupled and have different polarization directions.

In the foregoing embodiments, descriptions of each embodiment have respective focuses. For a part that is not described in detail in an embodiment, refer to related descriptions in other embodiments.

It should be noted that, for brief description, the foregoing method embodiments are represented as a series of actions. However, a person skilled in the art should understand that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In several embodiments provided in this application, it should be understood that the disclosed apparatus may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network elements. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, network equipment, or the like, and which may be specifically a processor in a computer device) to perform all or some of the steps of the methods described in embodiments of this application. The foregoing storage medium may include: any medium that can store program code, such as a USB flash drive, a removable hard disk, a magnetic disk, an optical disc, a read-only memory (read-only memory, ROM for short), or a random access memory (random access memory, RAM for short).

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication apparatus, comprising a first path, a second path, and a digital circuit, wherein
the first path is configured to: receive a first digital signal sent by the digital circuit; generate a plurality of phase-shifted first radio frequency signals based on the first digital signal, wherein the plurality of phase-shifted first radio frequency signals have different phases; and send the plurality of phase-shifted first radio frequency signals to an antenna array;
the second path is configured to: receive, in a receiving mode, a plurality of third radio frequency signals from the antenna array, wherein the plurality of third radio frequency signals are from a communication peer end; and generate a third digital signal based on the plurality of third radio frequency signals;
the second path is further configured to: receive, in a feedback mode, a plurality of second radio frequency signals from the antenna array, wherein the plurality of second radio frequency signals are obtained by coupling the plurality of phase-shifted first radio frequency signals; generate a digital feedback signal based on the plurality of second radio frequency signals; and feed back the digital feedback signal to the digital circuit; and
the digital circuit is configured to: generate the first digital signal; process the third digital signal; and perform digital signal compensation on the first digital signal based on the digital feedback signal.

2. The apparatus according to claim 1, wherein the digital signal compensation comprises one or more of digital predistortion DPD processing, in-phase-quadrature I-Q mismatch imbalance compensation, direct current offset compensation, intermodulation harmonic compensation, or transmitting signal power control.

3. The apparatus according to claim 1 or 2, wherein the first path comprises a first converter and a plurality of first transmitting subpaths;
the first converter is configured to: convert the first digital signal into a first radio frequency signal, and send the first radio frequency signal to the plurality of first transmitting subpaths separately; and
each of the plurality of first transmitting subpaths is configured to perform phase shifting on the first radio frequency signal, to obtain one of the plurality of phase-shifted first radio frequency signals.

4. The apparatus according to claim 3, wherein each first transmitting subpath comprises a first phase shifter and a power amplifier;
the first phase shifter is configured to perform phase shifting on the first radio frequency signal to obtain the phase-shifted first radio frequency signal; and
the power amplifier is configured to amplify the phase-shifted first radio frequency signal.

5. The apparatus according to claim 3 or 4, wherein the first converter comprises:
a first digital-to-analog converter, configured to convert the first digital signal into a first analog signal; and
a first up-converter, configured to convert the first analog signal into the first radio frequency signal.

6. The apparatus according to any one of claims 1 to 5, wherein the second path comprises a plurality of first receiving subpaths and a second converter;
each of the plurality of first receiving subpaths is configured to: receive one of the plurality of third radio frequency signals; amplify or attenuate the third radio frequency signal to obtain a processed third radio frequency signal; and perform phase shifting on the processed third radio frequency signal to obtain a phase-shifted third radio frequency signal, wherein the plurality of first receiving subpaths are configured to obtain a plurality of phase-shifted third radio frequency signals;
a part or all of the plurality of first receiving subpaths are configured to: receive the plurality of second radio frequency signals; amplify or attenuate the plurality of second radio frequency signals to obtain a plurality of processed second radio frequency signals; and perform phase shifting on the plurality of processed second radio frequency signals to obtain a plurality of phase-shifted second radio frequency signals; and
the second converter is configured to convert the plurality of phase-shifted third radio frequency signals into the third digital signal, and convert the plurality of phase-shifted second radio frequency signals into the digital feedback signal.

7. The apparatus according to claim 6, wherein each of the plurality of first receiving subpaths comprises a first low noise amplifier and a second phase shifter;
the first low noise amplifier is configured to: amplify or attenuate the third radio frequency signal to obtain the processed third radio frequency signal; and amplify or attenuate at least one of the plurality of second radio frequency signals to obtain at least one processed second radio frequency signal; and
the second phase shifter is configured to: perform phase shifting on the processed third radio frequency signal to obtain a phase-shifted third radio frequency signal; and perform phase shifting on the at least one processed second radio frequency signal to obtain at least one of the plurality of phase-shifted second radio frequency signals.

8. The apparatus according to claim 6 or 7, wherein the second converter comprises:
a first down-converter, configured to: convert the plurality of phase-shifted third radio frequency signals into a third analog signal, and convert the plurality of phase-shifted second radio frequency signals into a second analog signal; and
a first analog-to-digital converter, configured to convert the third analog signal into the third digital signal, and convert the second analog signal into the digital feedback signal.

9. The apparatus according to any one of claims 3 to 5, wherein the first path further comprises a plurality of second receiving subpaths and a third converter;
each of the plurality of second receiving subpaths is configured to: receive one of a plurality of fourth radio frequency signals from the antenna array; amplify or attenuate the fourth radio frequency signal to obtain a processed fourth radio frequency signal; and perform phase shifting on the processed fourth radio frequency signal to obtain a phase-shifted fourth radio frequency signal; and the plurality of second receiving subpaths are configured to obtain a plurality of phase-shifted fourth radio frequency signals;
the third converter is further configured to convert the plurality of phase-shifted fourth radio frequency signals into a fourth digital signal; and
the digital circuit is further configured to process the fourth digital signal.

10. The apparatus according to claim 9, wherein each of the plurality of second receiving subpaths comprises a second low noise amplifier and a third phase shifter;
the second low noise amplifier is configured to amplify or attenuate the fourth radio frequency signal to obtain the processed fourth radio frequency signal; and
the third phase shifter is configured to perform phase shifting on the processed fourth radio frequency signal to obtain the phase-shifted fourth radio frequency signal.

11. The apparatus according to claim 9 or 10, wherein the third converter comprises:
a second down-converter, configured to convert the plurality of phase-shifted fourth radio frequency signals into a fourth analog signal; and
a second analog-to-digital converter, configured to convert the fourth analog signal into the fourth digital signal.

12. The apparatus according to any one of claims 9 to 11, wherein the first path further comprises a first switch module, and the first switch module is configured to control the plurality of first transmitting subpaths or the plurality of second receiving subpaths in the first path to be connected within different time periods.

13. The apparatus according to any one of claims 6 to 8, wherein the second path further comprises a plurality of second transmitting subpaths and a fourth converter;
the digital circuit is further configured to generate a fifth digital signal;
the fourth converter is further configured to: convert the fifth digital signal into a fifth radio frequency signal, and send the fifth radio frequency signal to the plurality of second transmitting subpaths separately; and
each of the plurality of second transmitting subpaths is configured to perform phase shifting on the fifth radio frequency signal to obtain one phase-shifted fifth radio frequency signal, and the plurality of second transmitting subpaths are configured to: obtain a plurality of phase-shifted fifth radio frequency signals, wherein the plurality of phase-shifted fifth radio frequency signals have different phases; and send the plurality of phase-shifted fifth radio frequency signals to the antenna array.

14. The apparatus according to claim 13, wherein the second path further comprises a second switch module, and the second switch module is configured to control the plurality of first receiving subpaths or the plurality of second transmitting subpaths in the second path to be connected within different time periods.

15. The apparatus according to any one of claims 1 to 14, wherein the digital circuit comprises a baseband processor.

16. The apparatus according to any one of claims 1 to 15, wherein the apparatus further comprises the antenna array, the antenna array comprises a plurality of dual-polarized antenna units, each dual-polarized antenna unit of the plurality of dual-polarized antenna units comprises a first polarized antenna array element and a second polarized antenna array element, and the first polarized antenna array element and the second polarized antenna array element are connected and have different polarization directions; and the first polarized antenna array element is connected to the first path, and the second polarized antenna array element is connected to the second path.

17. A communication method, used in a communication apparatus, wherein the communication apparatus comprises a first path, a second path, and a digital circuit, and the method comprises:
receiving, through the first path, a first digital signal sent by the digital circuit; generating a plurality of phase-shifted first radio frequency signals based on the first digital signal, wherein the plurality of phase-shifted first radio frequency signals have different phases; and sending the plurality of phase-shifted first radio frequency signals to an antenna array;
receiving, in a receiving mode, a plurality of third radio frequency signals from the antenna array through the second path, wherein the plurality of third radio frequency signals are from a communication peer end; and generating a third digital signal based on the plurality of third radio frequency signals;
receiving, in a feedback mode, a plurality of second radio frequency signals from the antenna array through the second path, wherein the plurality of second radio frequency signals are obtained by coupling the plurality of phase-shifted first radio frequency signals; generating a digital feedback signal based on the plurality of second radio frequency signals; and feeding back the digital feedback signal to the digital circuit; and
generating the first digital signal by using the digital circuit; processing the third digital signal; and performing digital signal compensation on the first digital signal based on the digital feedback signal.
